# EUROPEAN PATENT APPLICATION

(11) **EP 4 664 984 A1**
(43) Date of publication of application: **17.12.2025**
(21) Application number: 24752650.2
(22) Date of filing: 11.01.2024
(51) Int. Cl.: H04W 28/02

(54) **PDU DISCARDING METHOD AND APPARATUS**

(30) Priority: 10.02.2023 CN 202310098740
(71) Applicant: Datang Mobile Communications Equipment Co., Ltd., Beijing 100085 (CN)
(72) Inventor: CHEN, Li, Beijing 100085 (CN)
(74) Representative: Studio Torta S.p.A.
(86) International application number: PCT/CN2024/071765
(87) International publication number: WO 2024/164792

(57) **Abstract**

The present application relates to a PDU discarding method and apparatus, and belongs to the technical field of communication. The method includes: receiving a first message transmitted from a network side, the first message is used to indicate discarding PDU; and discarding the PDU based on the first message. The present application achieves reasonably control of discarding uplink data packet by a terminal, improves data transmission performance, improves the performance of the XR service, and balances between the capacity and the service data transmission quality.

## Description

### CROSS-REFERENCES TO RELATED APPLICATIONS

The present application claims priority to Chinese patent application No. 202310098740.2 filed on February 10, 2023, entitled "PDU Discarding Method and Apparatus", which is hereby incorporated by reference in its entirety.

### FIELD

The present application relates to the field of communication, and in particular to methods and apparatuses for discarding packet data unit (PDU).

### BACKGROUND

Due to a large data volume of an extended reality (XR) service, the number of users supporting XR service transmission within a single cell is relatively limited. In case that a terminal discards some uplink data packets that do not need to be transmitted, the capacity of the entire system may be improved.

Packet discarding by the terminal may lead to a decrease in data transmission performance, and in turn degrade the performance of the XR service.

### BRIEF SUMMARY

Embodiments of the present application provide methods and apparatuses for discarding packet data unit (PDU) (or packet data packet), to solve the drawback in the related art that packet discarding by a terminal may lead to a decrease in data transmission performance, and in turn degrade the performance of the extended reality (XR) service.

An embodiment of the present application provides a method for discarding packet data unit (PDU), and the method includes:
receiving a first message transmitted from a network side, where the first message is used to indicate discarding PDU; and
discarding the PDU based on the first message.

In an embodiment, according to the method for discarding PDU, the first message is used to indicate discarding the PDU includes:
the first message is used to indicate starting a procedure of PDU discarding;
the first message is used to indicate a data radio bearer identity (DRB ID) or logical channel identity (LCH ID) allowing an execution of PDU discarding;
the first message is used to indicate a PDU set importance level threshold allowing an execution of PDU discarding; or
the first message is used to indicate an execution rule for PDU discarding.

In an embodiment, according to the method for discarding PDU, the first message includes dynamic indication information.

In an embodiment, according to the method for discarding PDU, the dynamic indication information includes one or more of following:
a media access control-control element (MAC-CE); or
a physical downlink control channel (PDCCH).

In an embodiment, according to the method for discarding PDU, the method further includes:
obtaining PDU discarding configuration information, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, according to the method for discarding PDU, the first message includes a broadcast message, a multicast message, or a unicast message;
where the first message is further used to indicate a presence of network congestion or to indicate discarding PDU in case of a presence of network congestion.

In an embodiment, according to the method for discarding PDU, the method further includes:
determining the presence of network congestion.

In an embodiment, according to the method for discarding PDU, determining the presence of network congestion includes one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio (SINR) measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

In an embodiment, according to the method for discarding PDU, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, according to the method for discarding PDU, discarding the PDU includes one or more of following:
discarding a PDU set in which the PDU is included; or
discarding PDU, where the PDU is one or more PDUs in a PDU set.

In an embodiment, according to the method for discarding PDU, discarding the PDU set in which the PDU is included includes:
determining, based on PDU set importance, a PDU set with lowest importance level or with an importance level lower than a PDU set importance level threshold as the PDU set to be discarded; and
discarding the PDU set.

In an embodiment, according to the method for discarding PDU, discarding the PDU includes one or more of following:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, where P is determined based on a packet loss characteristic of the terminal, predefined by a protocol, or indicated by the network side;
discarding PDUs not being transmitted in a ninth PDU set in case that z% of PDUs in the ninth PDU set are lost, where z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, where Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, where w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol (PDCP) discard timer configured by the network side expires, where the discarded PDU set is a PDU set with a PDU set importance level lower than a PDU set importance level threshold in a DRB or an LCH allowing the execution of PDU discarding.

An embodiment of the present application provides a method for discarding packet data unit (PDU), and the method includes:
transmitting a first message to a terminal, where the first message is used to indicate discarding PDU by the terminal.

In an embodiment, according to the method for discarding PDU, the first message is used to indicate discarding the PDU by the terminal includes:
the first message is used to indicate starting a procedure of PDU discarding by the terminal;
the first message is used to indicate a data radio bearer identity (DRB ID) or logical channel identity (LCH ID) allowing an execution of PDU discarding by the terminal;
the first message is used to indicate a PDU set importance level threshold allowing an execution of PDU discarding by the terminal; or
the first message is used to indicate an execution rule for PDU discarding by the terminal.

In an embodiment, according to the method for discarding PDU, the first message includes dynamic indication information.

In an embodiment, according to the method for discarding PDU, the dynamic indication information includes one or more of following:
a media access control-control element (MAC-CE); or
a physical downlink control channel (PDCCH).

In an embodiment, according to the method for discarding PDU, the method further includes:
transmitting PDU discarding configuration information to the terminal, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, according to the method for discarding PDU, the first message includes a broadcast message, a multicast message, or a unicast message;
where the first message is further used to indicate a presence of network congestion or to indicate discarding PDU in case of a presence of network congestion.

In an embodiment, according to the method for discarding PDU, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

An embodiment of the present application provides a terminal, and the terminal includes: a memory, a transceiver, and a processor;
where the memory is used for storing a computer program; the transceiver is used for transmitting and receiving data under control of the processor; and the processor is used for reading the computer program in the memory and performing following operations:
receiving a first message transmitted from a network side, where the first message is used to indicate discarding PDU; and
discarding the PDU based on the first message.

In an embodiment, according to the terminal, the first message is used to indicate discarding the PDU includes:
the first message is used to indicate starting a procedure of PDU discarding;
the first message is used to indicate a data radio bearer identity (DRB ID) or logical channel identity (LCH ID) allowing an execution of PDU discarding;
the first message is used to indicate a PDU set importance level threshold allowing an execution of PDU discarding; or
the first message is used to indicate an execution rule for PDU discarding.

In an embodiment, according to the terminal, the first message includes dynamic indication information.

In an embodiment, according to the terminal, the dynamic indication information includes one or more of following:
a media access control-control element (MAC-CE); or
a physical downlink control channel (PDCCH).

In an embodiment, according to the terminal, the operation further includes:
obtaining PDU discarding configuration information, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, according to the terminal, the first message includes a broadcast message, a multicast message, or a unicast message;
where the first message is further used to indicate a presence of network congestion or to indicate discarding PDU in case of a presence of network congestion.

In an embodiment, according to the terminal, the operation further includes:
determining the presence of network congestion.

In an embodiment, according to the terminal, determining the presence of network congestion includes one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio (SINR) measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

In an embodiment, according to the terminal, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, according to the terminal, discarding the PDU includes one or more of following:
discarding a PDU set in which the PDU is included; or
discarding PDU, where the PDU is one or more PDUs in a PDU set.

In an embodiment, according to the terminal, discarding the PDU set in which the PDU is included includes:
determining, based on PDU set importance, a PDU set with lowest importance level or with an importance level lower than a PDU set importance level threshold as the PDU set to be discarded; and
discarding the PDU set.

In an embodiment, according to the terminal, discarding the PDU includes one or more of following:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, where P is determined based on a packet loss characteristic of the terminal, predefined by a protocol, or indicated by the network side;
discarding PDUs not being transmitted in a ninth PDU set in case that z% of PDUs in the ninth PDU set are lost, where z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, where Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, where w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol (PDCP) discard timer configured by the network side expires, where the discarded PDU set is a PDU set with a PDU set importance level lower than a PDU set importance level threshold in a DRB or an LCH allowing the execution of PDU discarding.

An embodiment of the present application provides a network side device, and the network side device includes: a memory, a transceiver, and a processor;
where the memory is used for storing a computer program; the transceiver is used for transmitting and receiving data under control of the processor; and the processor is used for reading the computer program in the memory and performing following operations:
transmitting a first message to a terminal, where the first message is used to indicate discarding PDU by the terminal.

In an embodiment, according to the network side device, the first message is used to indicate discarding the PDU by the terminal includes:
the first message is used to indicate starting a procedure of PDU discarding by the terminal;
the first message is used to indicate a data radio bearer identity (DRB ID) or logical channel identity (LCH ID) allowing an execution of PDU discarding by the terminal;
the first message is used to indicate a PDU set importance level threshold allowing an execution of PDU discarding by the terminal; or
the first message is used to indicate an execution rule for PDU discarding by the terminal.

In an embodiment, according to the network side device, the first message includes dynamic indication information.

In an embodiment, according to the network side device, the dynamic indication information includes one or more of following:
a media access control-control element (MAC-CE); or
a physical downlink control channel (PDCCH).

In an embodiment, according to the network side device, the operation further includes:
transmitting PDU discarding configuration information to the terminal, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, according to the network side device, the first message includes a broadcast message, a multicast message, or a unicast message;
where the first message is further used to indicate a presence of network congestion or to indicate discarding PDU in case of a presence of network congestion.

In an embodiment, according to the network side device, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

An embodiment of the present application provides an apparatus for discarding packet data unit (PDU), and the apparatus includes:
a first receiving module, used for receiving a first message transmitted from a network side, where the first message is used to indicate discarding PDU; and
a discarding module, used for discarding the PDU based on the first message.

In an embodiment, according to the apparatus, the first message is used to indicate discarding the PDU includes one or more of following:
starting a procedure of PDU discarding;
a data radio bearer identity (DRB ID) or logical channel identity (LCH ID) allowing an execution of PDU discarding;
a PDU set importance level threshold allowing an execution of PDU discarding; or
an execution rule for PDU discarding.

In an embodiment, according to the apparatus, the first message includes dynamic indication information.

In an embodiment, according to the apparatus, the dynamic indication information includes one or more of following:
a media access control-control element (MAC-CE); or
a physical downlink control channel (PDCCH).

In an embodiment, the apparatus further includes:
an obtaining module, used for obtaining PDU discarding configuration information, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, according to the apparatus, the first message includes a broadcast message, a multicast message, or a unicast message;
where the first message is further used to indicate a presence of network congestion or to indicate discarding PDU in case of a presence of network congestion.

In an embodiment, according to the apparatus, the apparatus further includes:
a determining module, used for determining the presence of network congestion.

In an embodiment, according to the apparatus, the determining module is used for performing one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio (SINR) measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

In an embodiment, according to the apparatus, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, according to the apparatus, the discarding module is used for performing one or more of following:
discarding a PDU set in which the PDU is included; or
discarding PDU, where the PDU is one or more PDUs in a PDU set.

In an embodiment, according to the apparatus, the discarding module is used for:
determining, based on PDU set importance, a PDU set with lowest importance level or with an importance level lower than a PDU set importance level threshold as the PDU set to be discarded; and
discarding the PDU set.

In an embodiment, according to the apparatus, the discarding module is used for:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, where P is determined based on a packet loss characteristic of the terminal, predefined by a protocol, or indicated by the network side;
discarding PDUs not being transmitted in a ninth PDU set in case that z% of PDUs in the ninth PDU set are lost, where z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, where Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, where w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol (PDCP) discard timer configured by the network side expires, where the discarded PDU set is a PDU set with a PDU set importance level lower than a PDU set importance level threshold in a DRB or an LCH allowing the execution of PDU discarding.

An embodiment of the present application provides an apparatus for discarding packet data unit (PDU), and the apparatus includes:
a transmitting module, used for transmitting a first message to a terminal, where the first message is used to indicate discarding PDU by the terminal.

In an embodiment, according to the apparatus, the first message is used to indicate discarding the PDU by the terminal includes:
the first message is used to indicate starting a procedure of PDU discarding by the terminal;
the first message is used to indicate a data radio bearer identity (DRB ID) or logical channel identity (LCH ID) allowing an execution of PDU discarding by the terminal;
the first message is used to indicate a PDU set importance level threshold allowing an execution of PDU discarding by the terminal; or
the first message is used to indicate an execution rule for PDU discarding by the terminal.

In an embodiment, according to the apparatus, the first message includes dynamic indication information.

In an embodiment, according to the apparatus, the dynamic indication information includes one or more of following:
a media access control-control element (MAC-CE); or
a physical downlink control channel (PDCCH).

In an embodiment, according to the apparatus, the apparatus further includes:
a transmitting module, used for transmitting PDU discarding configuration information to the terminal, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, according to the apparatus, the first message includes a broadcast message, a multicast message, or a unicast message;
where the first message is further used to indicate a presence of network congestion or to indicate discarding PDU in case of a presence of network congestion.

In an embodiment, according to the apparatus, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

An embodiment of the present application provides a processor-readable storage medium, storing a computer program, where the computer program is used for causing a processor to perform the method for discarding packet data unit (PDU) as described above.

In the method for discarding PDU provided by the embodiments of the present application, by receiving a message transmitted from the network side for indicating PDU discarding, an operation of discarding uplink PDU on a specified DRB or logical channel may be performed under a determined condition, based on the message for PDU discarding, to achieve reasonably control of discarding the uplink data packet by the terminal, improve data transmission performance, improve the performance of the XR service, and balance between the capacity and the service data transmission quality.

### BRIEF DESCRIPTION OF THE DRAWINGS

To clearly illustrate the solutions in the embodiments of the present application or the related art, the drawings used in the description of the embodiments or the related art are briefly described below. The drawings in the following description are only some embodiments of the present application, and other drawings may be obtained according to these drawings without any creative effort for those skilled in the art.
FIG. 1 is a schematic diagram of definition of a data packet in an extended reality (XR) service modeling according to a related art;
FIG. 2 is a schematic diagram of a relationship between an extended reality (XR) service frame and a packet data unit (PDU) according to a related art;
FIG. 3 is a first schematic flowchart of a method for discarding packet data unit (PDU) according to an embodiment of the present application;
FIG. 4 is a first schematic diagram of a format of a media access control-control element (MAC-CE) according to an embodiment of the present application;
FIG. 5 is a second schematic diagram of a format of a media access control-control element (MAC-CE) according to an embodiment of the present application;
FIG. 6 is a third schematic diagram of a format of a media access control-control element (MAC-CE) according to an embodiment of the present application;
FIG. 7 is a fourth schematic diagram of a format of a media access control-control element (MAC-CE) according to an embodiment of the present application;
FIG. 8 is a second schematic flowchart of a method for discarding packet data unit (PDU) according to an embodiment of the present application;
FIG. 9 is a schematic structural diagram of a terminal according to an embodiment of the present application;
FIG. 10 is a schematic structural diagram of a network side according to an embodiment of the present application;
FIG. 11 is a first schematic structural diagram of an apparatus for discarding packet data unit (PDU) according to an embodiment of the present application; and
FIG. 12 is a second schematic structural diagram of an apparatus for discarding packet data unit (PDU) according to an embodiment of the present application.

### DETAILED DESCRIPTION

In the embodiments of the present application, the term "and/or" describes a related relationship between associated objects, and indicates that there may be three types of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar to it.

The solutions according to the embodiments of the present application are clearly and completely described in the following with reference to the accompanying drawings in the embodiments of the present application. These embodiments are only a part of embodiments of the present application, and not all of the embodiments. All other embodiments obtained by those skilled in the art based on the embodiments of the present application without any creative effort fall in the scope of the present application.

Embodiments of the present application provide methods and apparatuses for discarding packet data unit (PDU), for reasonably controlling discarding of an uplink data packet by a terminal, and balancing between the capacity and the service data transmission quality.

The method and the apparatus are based on the same concept. Since the principles for solving problems by the method and the apparatus are similar, the implementations of the apparatus and the method may refer to each other, and repetitive parts are not repeated.

The solutions according to the embodiments of the present application may be applicable to various systems, especially 5G system. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems each includes a terminal device and a network device, and may further include a core network part, such as an evolved packet system (EPS), a 5G system (5GS), and the like.

The following content is firstly introduced.

As the most important 5G media applications, extended reality (XR) and cloud game (CG) have requirements for low latency, high throughput, and high reliability, requiring transmission of large data volumes within a short time. XR is a general term for different types of reality, refers to all real and virtual combined environments and human-computer interactions generated by computer technology and devices, and includes representative forms such as an augmented reality (AR), a mixed reality (MR), and a virtual reality (VR).

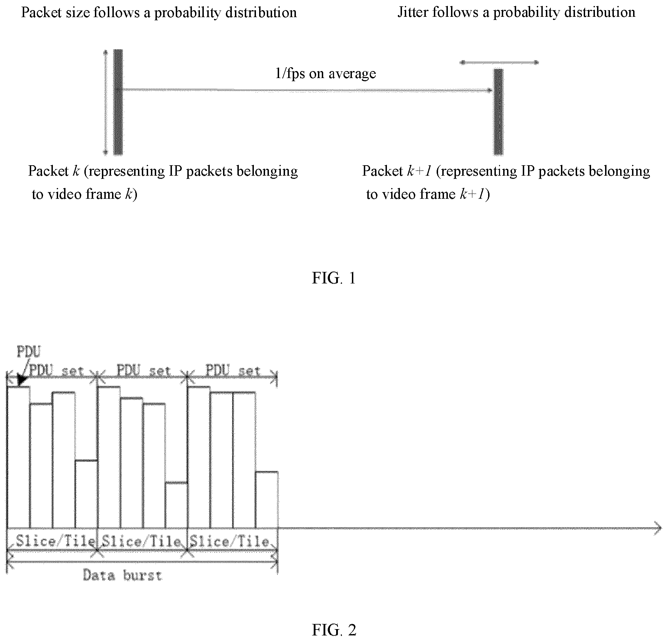

FIG. 1 is a schematic diagram of definition of a data packet in an XR service modeling according to a related art. As shown in FIG. 1, an XR service is modeled based on a data frame. For example, each data frame may correspond to an XR video frame.

FIG. 2 is a schematic diagram of a relationship between an XR service frame and a packet data unit (PDU) according to a related art. As shown in FIG. 2, the same frame/data burst may be divided into one or more packet data unit sets (PDU sets), and one PDU set includes multiple PDUs.

In the embodiments of the present application, a data frame is equivalent to a data burst, and a PDU is equivalent to a data packet.

Characteristics of the XR service are as follows:
1. a video frame period includes several types, namely 15 fps (frames per second), 30 fps, 60 fps, 90 fps, and 120 fps, with corresponding periods of 66.6 ms, 33.3 ms, 16.66 ms, and 8.87 ms;
2. a frame arrival time has an unpredictable jitter;
3. a latency requirement of 10 ms or a range of 7 ms-15 ms;
4. a bit rate of 10 Mbps-200 Mbps;
5. PDU set quality of service (QoS) parameters at least include:
   a PDU set error rate (PSER);
   a PDU set delay budget (PSDB); or
   a PDU set integrated indication (PSII), used for indicating whether an application layer needs to use all PDUs in the PDU set.

For some coding types, a correct reception of all PDUs in the PDU set is required to ensure a correct reception of an application layer service data; for other coding types, all application layer information for the PDU set may be restored after partial PDUs in the PDU set (e.g., the first N, the last N, or x% of data) are received correctly. In the related art, capacity of the entire system may be improved in case that the terminal discards some uplink data packets that do not need to be transmitted, but a decrease in data transmission performance may be caused by arbitrary packet discarding by the terminal.

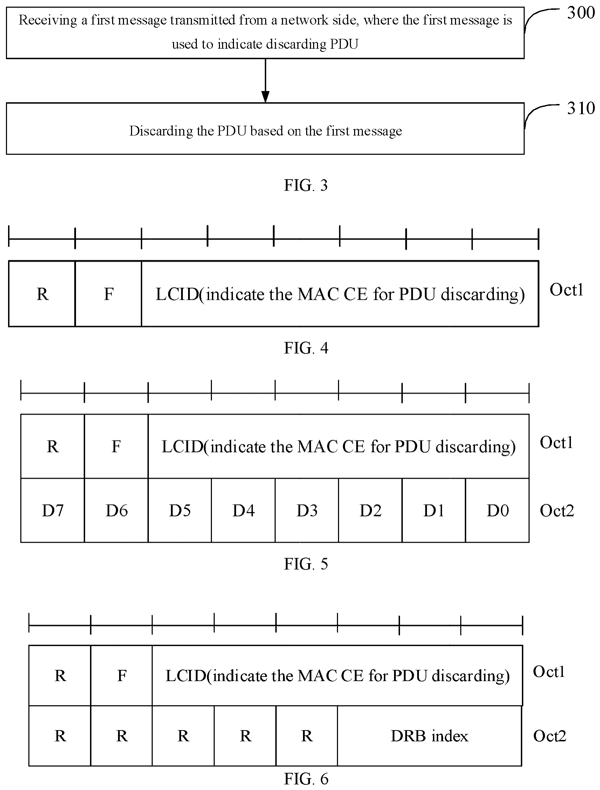

FIG. 3 is a first schematic flowchart of a method for discarding PDU according to an embodiment of the present application. As shown in FIG. 3, an embodiment of the present application provides a method for discarding PDU, and an execution subject of the method is a terminal, such as a mobile phone. The method includes following steps.

Step 300: receiving a first message transmitted from a network side, where the first message is used to indicate discarding PDU.

In an embodiment, in order to balance between the capacity and the service data transmission quality while improving the system capacity, partial PDUs may be discarded. The network side may indicate discarding PDU by the terminal, to avoid affecting data transmission performance after the PDU are discarded.

In an embodiment, the terminal may receive the first message transmitted from the network side for indicating PDU discarding.

In an embodiment, the network side may transmit the first message to the terminal for indicating PDU discarding.

Step 310: discarding the PDU based on the first message.

In an embodiment, after receiving the first message transmitted from the network side, the terminal may discard the PDU based on the first message.

In the method for discarding PDU provided by the embodiment of the present application, by receiving the message transmitted from the network side for indicating PDU discarding, the terminal may discard uplink PDU of a specified data radio bearer (DRB) or logical channel under a determined condition, based on the message for PDU discarding, to achieve reasonably control of discarding the uplink data packet by the terminal and balance between the capacity and the service data transmission quality.

In an embodiment, the first message is used to indicate discarding the PDU includes:
the first message is used to indicate starting a procedure of PDU discarding;
the first message is used to indicate a data radio bearer identity (DRB ID) or logical channel identity (LCH ID) allowing an execution of PDU discarding;
the first message is used to indicate a PDU set importance level threshold allowing an execution of PDU discarding; or
the first message is used to indicate an execution rule for PDU discarding.

In an embodiment, the DRB ID may be an identity of a DRB, and the terminal may determine corresponding DRB based on the DRB ID.

In an embodiment, the LCH ID may be an identity of a LCH, and the terminal may determine corresponding LCH based on the LCH ID.

In an embodiment, the PDU set importance level may be an importance level configured by the network side for the PDU set of the terminal, and the PDU set with a higher importance level is less likely to be discarded.

In an embodiment, the first message is used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. the execution rule for PDU discarding;
6. starting the procedure of PDU discarding, and the DRB ID or LCH ID allowing the execution of PDU discarding;
7. starting the procedure of PDU discarding, the DRB ID or LCH ID allowing the execution of PDU discarding, and the PDU set importance level threshold allowing the execution of PDU discarding;
8. starting the procedure of PDU discarding, and the execution rule for PDU discarding;
9. the DRB ID or LCH ID allowing the execution of PDU discarding, and the execution rule for PDU discarding;
10. starting the procedure of PDU discarding, and the PDU set importance level threshold allowing the execution of PDU discarding;
11. the PDU set importance level threshold allowing the execution of PDU discarding, and the execution rule for PDU discarding;
12. the DRB ID or LCH ID allowing the execution of PDU discarding, the execution rule for PDU discarding, and the PDU set importance level threshold allowing the execution of PDU discarding;
13. starting the procedure of PDU discarding, the DRB ID or LCH ID allowing the execution of PDU discarding, and the execution rule for PDU discarding; or
14. starting the procedure of PDU discarding, the DRB ID or LCH ID allowing the execution of PDU discarding, the execution rule for PDU discarding, and the PDU set importance level threshold allowing the execution of PDU discarding.

In an embodiment, the terminal may receive the first message transmitted from the network side, where the first message may indicate starting the procedure of PDU discarding, and then the terminal may determine to start the procedure of PDU discarding based on the first message.

In an embodiment, the network side may transmit the first message to the terminal for indicating starting the procedure of PDU discarding by the terminal.

In an embodiment, the terminal may receive the first message transmitted from the network side, where the first message may indicate the DRB ID or LCH ID allowing the execution of PDU discarding, and then the terminal may discard PDU of the DRB or LCH corresponding to the DRB ID or LCH ID based on the first message.

In an embodiment, the network side may transmit the first message to the terminal for indicating the DRB ID or LCH ID allowing the execution of PDU discarding.

In an embodiment, the terminal may receive the first message transmitted from the network side, where the first message may indicate the PDU set importance level threshold allowing the execution of PDU discarding, and then the terminal may determine an importance level of each PDU set allowing the execution of discarding, based on the first message.

In an embodiment, the network side may transmit the first message to the terminal for indicating the PDU set importance level threshold allowing the execution of PDU discarding.

In an embodiment, the terminal may receive the first message transmitted from the network side, where the first message may indicate the execution rule for PDU discarding, and then the terminal may discard PDU according to the execution rule for PDU discarding based on the first message.

In an embodiment, the network side may transmit the first message to the terminal for indicating the execution rule for PDU discarding by the terminal. In an embodiment, the terminal may receive the first message transmitted from the network side, where the first message may indicate any one or any combination of following: starting the procedure of PDU discarding, the DRB ID or LCH ID allowing the execution of PDU discarding, the PDU set importance level threshold allowing the execution of PDU discarding, or the execution rule for PDU discarding, and then the terminal may discard PDU based on the first message.

In an embodiment, the first message includes dynamic indication information.

In an embodiment, the dynamic indication information may be used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. the execution rule for PDU discarding;
6. starting the procedure of PDU discarding, and the DRB ID or LCH ID allowing the execution of PDU discarding;
7. starting the procedure of PDU discarding, the DRB ID or LCH ID allowing the execution of PDU discarding, and the PDU set importance level threshold allowing the execution of PDU discarding;
8. starting the procedure of PDU discarding, and the execution rule for PDU discarding;
9. the DRB ID or LCH ID allowing the execution of PDU discarding, and the execution rule for PDU discarding;
10. starting the procedure of PDU discarding, and the PDU set importance level threshold allowing the execution of PDU discarding;
11. the PDU set importance level threshold allowing the execution of PDU discarding, and the execution rule for PDU discarding;
12. the DRB ID or LCH ID allowing the execution of PDU discarding, the execution rule for PDU discarding, and the PDU set importance level threshold allowing the execution of PDU discarding;
13. starting the procedure of PDU discarding, the DRB ID or LCH ID allowing the execution of PDU discarding, and the execution rule for PDU discarding; or
14. starting the procedure of PDU discarding, the DRB ID or LCH ID allowing the execution of PDU discarding, the execution rule for PDU discarding, and the PDU set importance level threshold allowing the execution of PDU discarding.

In an embodiment, the network side may transmit dynamic indication information to the terminal for indicating discarding PDU by the terminal.

In an embodiment, the terminal may receive the dynamic indication information transmitted from the network side and then discard PDU based on the dynamic indication information.

In an embodiment, the dynamic indication information includes one or more of following:
a media access control-control element (MAC-CE); or
a physical downlink control channel (PDCCH).

In an embodiment, the terminal may receive the MAC-CE transmitted from the network side, where the MAC-CE may be used to indicate PDU discarding, and then the terminal may discard PDU based on the MAC-CE.

In an embodiment, the network side may transmit the MAC-CE to the terminal, where the MAC-CE may be used to indicate discarding PDU by the terminal.

In an embodiment, the MAC-CE may be used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. the execution rule for PDU discarding;
6. starting the procedure of PDU discarding, and the DRB ID or LCH ID allowing the execution of PDU discarding;
7. starting the procedure of PDU discarding, the DRB ID or LCH ID allowing the execution of PDU discarding, and the PDU set importance level threshold allowing the execution of PDU discarding;
8. starting the procedure of PDU discarding, and the execution rule for PDU discarding;
9. the DRB ID or LCH ID allowing the execution of PDU discarding, and the execution rule for PDU discarding;
10. starting the procedure of PDU discarding, and the PDU set importance level threshold allowing the execution of PDU discarding;
11. the PDU set importance level threshold allowing the execution of PDU discarding, and the execution rule for PDU discarding;
12. the DRB ID or LCH ID allowing the execution of PDU discarding, the execution rule for PDU discarding, and the PDU set importance level threshold allowing the execution of PDU discarding;
13. starting the procedure of PDU discarding, the DRB ID or LCH ID allowing the execution of PDU discarding, and the execution rule for PDU discarding; or
14. starting the procedure of PDU discarding, the DRB ID or LCH ID allowing the execution of PDU discarding, the execution rule for PDU discarding, and the PDU set importance level threshold allowing the execution of PDU discarding.

In an embodiment, the terminal may receive the MAC-CE transmitted from the network side, and then may discard PDU based on the MAC-CE.

In an embodiment, the terminal may receive the PDCCH transmitted from the network side for indicating PDU discarding, and may discard PDU based on the PDCCH.

In an embodiment, the network side may transmit the PDCCH to the terminal for indicating discarding PDU by the terminal.

In an embodiment, the PDCCH may be used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. starting the procedure of PDU discarding, and the DRB ID or LCH ID allowing the execution of PDU discarding;
6. starting the procedure of PDU discarding, and the PDU set importance level threshold allowing the execution of PDU discarding; or
7. starting the procedure of PDU discarding, the DRB ID or LCH ID allowing the execution of PDU discarding, and the PDU set importance level threshold allowing the execution of PDU discarding.

In an embodiment, the terminal may receive the PDCCH transmitted from the network side, and may discard PDU based on the PDCCH.

In an embodiment, the method further includes:
obtaining PDU discarding configuration information, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, the PDU discarding configuration information may be transmitted from the network side to the terminal, and used to indicate any of following cases:
1. the DRB ID or LCH ID allowing the execution of PDU discarding;
2. the PDU set importance level threshold allowing the execution of PDU discarding;
3. the DRB ID or LCH ID allowing the execution of PDU discarding, and the PDU set importance level threshold allowing the execution of PDU discarding;
4. the execution rule for PDU discarding;
5. the DRB ID or LCH ID allowing the execution of PDU discarding, and the execution rule for PDU discarding;
6. the PDU set importance level threshold allowing the execution of PDU discarding, and the execution rule for PDU discarding; or
7. the DRB ID or LCH ID allowing the execution of PDU discarding, the PDU set importance level threshold allowing the execution of PDU discarding, and the execution rule for PDU discarding.

In an embodiment, the execution rule for PDU discarding may be transmitted from the network side to the terminal for indicating discarding PDU by the terminal under a specific condition.

In an embodiment, the DRB ID may be an identity of a DRB, and the terminal may determine corresponding DRB based on the DRB ID.

In an embodiment, the LCH ID may be an identity of an LCH, and the terminal may determine corresponding LCH based on the LCH ID.

In an embodiment, the DRB ID allowing the execution of PDU discarding may represent that the PDU in the DRB corresponding to the DRB ID is allowed to be discarded, but the specific PDU to be discarded needs to be determined based on a subsequent indication. In an embodiment, the DRB ID allowing the execution of PDU discarding may represent that the PDU in the DRB corresponding to the DRB ID may be discarded without a subsequent indication, and in case that the PDU set importance level threshold allowing the execution of PDU discarding is further included, only the PDU with an importance level lower than the indicated importance level may be discarded.

In an embodiment, the LCH ID allowing the execution of PDU discarding may represent that the PDU in the LCH corresponding to the LCH ID is allowed to be discarded, but the specific PDU to be discarded needs to be determined based on a subsequent indication. In an embodiment, the LCH ID allowing the execution of PDU discarding may represent that the PDU in the LCH corresponding to the LCH ID may be discarded without a subsequent indication, and in case that the PDU set importance level threshold allowing the execution of PDU discarding is further included, only the PDU with an importance level lower than the indicated importance level may be discarded.

In an embodiment, in case that only partial PDUs, among PDUs subsequently indicated to be discarded, are the PDUs allowed to be discarded, only the partial PDUs allowed to be discarded among the PDU indicated to be discarded are discarded.

In an embodiment, the terminal may receive the PDU discarding configuration information transmitted from the network side before receiving the first message transmitted from the network side.

In an embodiment, the network side may transmit the PDU discarding configuration information to the terminal before transmitting the first message to the terminal.

In an embodiment, the terminal may receive the PDU discarding configuration information transmitted from the network side before receiving the first message transmitted from the network side, where the PDU discarding configuration information may be used to indicate the DRB ID or LCH ID allowing the execution of PDU discarding. The terminal may determine the DRB or LCH allowing the execution of PDU discarding based on the PDU discarding configuration information, and in case that the PDU set importance level threshold allowing the execution of PDU discarding is further included, only the PDU with an importance level lower than the indicated importance level may be discarded.

In an embodiment, the network side may transmit the PDU discarding configuration information to the terminal before transmitting the first message to the terminal, and the PDU discarding configuration information may be used to indicate the DRB ID or LCH ID allowing the execution of PDU discarding.

In an embodiment, the terminal may receive the PDU discarding configuration information transmitted from the network side. In case that the PDU discarding configuration information is used to indicate the DRB ID or LCH ID allowing the execution of PDU discarding, the terminal may receive the first message transmitted from the network side, where the first message may not indicate the DRB ID or LCH ID allowing the execution of PDU discarding. The terminal may perform an operation of PDU discarding on the DRB or LCH corresponding to the DRB ID or LCH ID allowing the execution of PDU discarding indicated by the PDU discarding configuration information, and in case that the PDU set importance level threshold allowing the execution of PDU discarding is further included, only the PDU with an importance level lower than the indicated importance level may be discarded.

For example, the terminal may receive the PDU discarding configuration information transmitted from the network side, and the PDU discarding configuration information may indicate that the DRBs on which PDU discarding is allowed are DRB A, DRB B, and DRB C, and then the terminal may receive the first message transmitted from the network side, and the first message may not indicate the DRB ID or LCH ID allowing the execution of PDU discarding. The terminal may perform an operation of PDU discarding on DRB A, DRB B, and DRB C, and in case that the PDU discarding configuration information further includes the PDU set importance level threshold allowing the execution of PDU discarding and the PDU importance level of the DRB A is lower than the indicated importance level, only the PDU in DRB A are discarded.

In an embodiment, the network side may transmit the PDU discarding configuration information to the terminal, and the PDU discarding configuration information may be used to indicate the DRB ID or LCH ID allowing the execution of PDU discarding, and then the network side may transmit the first message to the terminal, and the first message may not indicate the DRB ID or LCH ID allowing the execution of PDU discarding.

In an embodiment, the terminal may receive the PDU discarding configuration information transmitted from the network side. In case that the PDU discarding configuration information is used to indicate the DRB ID or LCH ID allowing the execution of PDU discarding, the terminal may receive the first message transmitted from the network side, and the first message may indicate, in a bitmap or index number manner, that one or more DRBs or LCHs among the DRBs or LCHs corresponding to the DRB IDs or LCH IDs indicated by the PDU discarding configuration information allow the execution of PDU discarding. The terminal may perform an operation of PDU discarding on one or more DRBs or LCHs indicated by the first message. In case that the PDU set importance level threshold allowing the execution of PDU discarding is further included, only the PDU with an importance level lower than the indicated importance level may be discarded.

For example, the terminal may receive the PDU discarding configuration information transmitted from the network side, and the PDU discarding configuration information may indicate that the DRBs on which PDU discarding is allowed are DRB A, DRB B, and DRB C, and then the terminal may receive the first message transmitted from the network side, and the first message may indicate discarding PDU in DRB A and DRB B in a bitmap manner. The terminal may perform an operation of PDU discarding on DRB A and DRB B, and in case that the PDU discarding configuration information further includes the PDU set importance level threshold allowing the execution of PDU discarding and the PDU importance level of the DRB A is lower than the indicated importance level, only the PDU in DRB A are discarded.

For example, the terminal may receive the PDU discarding configuration information transmitted from the network side, and the PDU discarding configuration information may indicate that the DRBs on which PDU discarding is allowed are DRB A, DRB B, and DRB C, then the terminal may receive the first message transmitted from the network side, and the first message may indicate discarding PDU in DRB A and DRB D in a bitmap manner, and the terminal may perform an operation of PDU discarding on DRB A. The PDU in DRB D may not be discarded since the PDU in DRB D is not allowed for discarding.

In an embodiment, the network side may transmit the PDU discarding configuration information to the terminal, and the PDU discarding configuration information may be used to indicate the DRB ID or LCH ID allowing the execution of PDU discarding, and then the network side may transmit the first message to the terminal, and the first message may indicate, in a bitmap or index manner, that an operation of PDU discarding may be performed on one or more DRBs or LCHs among DRBs or LCHs corresponding to the DRB IDs or LCH IDs indicated by the PDU discarding configuration information.

In an embodiment, before receiving the first message transmitted from the network side, the terminal may receive the PDU discarding configuration information transmitted from the network side, where the PDU discarding configuration information may be used to indicate the execution rule for PDU discarding. The terminal may discard PDU according to the execution rule for PDU discarding based on the PDU discarding configuration information.

In an embodiment, before transmitting the first message to the terminal, the network side may transmit the PDU discarding configuration information to the terminal, where the PDU discarding configuration information may be used to indicate the execution rule for PDU discarding.

In an embodiment, the terminal may receive the PDU discarding configuration information transmitted from the network side and then receive the first message transmitted from the network side. The terminal may discard PDU based on the PDU discarding configuration information and the first message.

In an embodiment, the first message includes a broadcast message, a multicast message, or a unicast message;
the first message is further used to indicate a presence of network congestion or to indicate discarding PDU in case of a presence of network congestion.

In an embodiment, the terminal may receive the broadcast message transmitted from the network side, and then determine to discard PDU in case of the presence of network congestion based on the broadcast message.

In an embodiment, the network side may transmit, to the terminal, the broadcast message for indicating discarding PDU by the terminal in case of the presence of network congestion.

In an embodiment, the terminal may receive the broadcast message transmitted from the network side via a new system message, and discard PDU in case of the presence of network congestion based on the broadcast message.

In an embodiment, the network side may introduce the new system message for transmitting, to all terminals in the cell, the broadcast message indicating discarding PDU by the terminal in case of the presence of network congestion.

In an embodiment, the terminal may receive the broadcast message and unicast radio resource control (RRC) signaling transmitted from the network side via the new system message, where the unicast RRC signaling may be used to indicate the DRB ID or LCH ID allowing the execution of PDU discarding. The terminal may discard PDU in case of the presence of network congestion based on the broadcast information and the DRB ID or LCH ID allowing the execution of PDU discarding.

In an embodiment, the network side may transmit the unicast RRC signaling to the terminal, where the unicast RRC signaling may be used to indicate information of the DRB ID or LCH ID allowing the execution of PDU discarding.

In an embodiment, the terminal may receive the multicast message transmitted from the network side, and discard PDU in case of the presence of network congestion based on the multicast message.

In an embodiment, the network side may transmit, to the terminal, the multicast message for indicating discarding PDU by the terminal in case of the presence of network congestion.

In an embodiment, the terminal may receive the multicast message transmitted from the network side via a group-radio network temporary identity (RNTI), and discard PDU in case of the presence of network congestion based on the multicast message.

In an embodiment, the network side may configure a group-RNTI for a group of terminals, and use the group-RNTI to transmit the multicast message to all terminals in the group. The multicast message may be used to indicate discarding PDU by the terminal in case of the presence of network congestion.

In an embodiment, the terminal may receive the multicast message and unicast RRC signaling transmitted from the network side via the group-RNTI, where the unicast RRC signaling may be used to indicate the DRB ID or LCH ID allowing the execution of PDU discarding. The terminal may discard PDU in case of the presence of network congestion based on the multicast message and the DRB ID or LCH ID allowing the execution of PDU discarding.

In an embodiment, the terminal may receive the unicast message transmitted from the network side and discard PDU in case of the presence of network congestion based on the unicast message.

In an embodiment, the network side may transmit, to the terminal, the unicast message for indicating discarding PDU by the terminal in case of the presence of network congestion.

In an embodiment, the terminal may receive the unicast message transmitted from the network side via the unicast RRC signaling, and discard PDU in case of the presence of network congestion based on the unicast message.

In an embodiment, the network side may transmit the unicast message to the terminal via the unicast RRC signaling, where the unicast message may be used to indicate discarding PDU by the terminal in case of the presence of network congestion.

In an embodiment, the terminal may receive the unicast message and the DRB ID or LCH ID allowing the execution of PDU discarding transmitted from the network side via the unicast RRC signaling, and discard PDU in case of the presence of network congestion based on the unicast message and the DRB ID or LCH ID allowing the execution of PDU discarding.

In an embodiment, the method further includes:
the terminal determines the presence of network congestion.

In an embodiment, the terminal may first receive the first message, and determine, based on the first message, that the PDU discarding may be performed in case of the presence of network congestion. In case it is determined that the network congestion is present, the terminal may discard PDU based on the broadcast message.

In an embodiment, determining, by the terminal, the presence of network congestion includes one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio (SINR) measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

In an embodiment, the terminal may receive the first message transmitted from the network side, where the first message may be used to indicate the presence of network congestion. The terminal may determine the presence of network congestion after receiving the first message and discard PDU.

In an embodiment, the terminal may determine the presence of network congestion in case that the terminal receives broadcast information transmitted from the network side and the broadcast information is used for indicating discarding PDU in case of the presence of network congestion, and then the terminal may discard PDU based on the broadcast information.

In an embodiment, the terminal may determine the presence of network congestion in case that the terminal receives multicast information transmitted from the network side and the multicast information is used for indicating discarding PDU in case of the presence of network congestion, and then the terminal may discard PDU based on the multicast information.

In an embodiment, the terminal may determine the presence of network congestion in case that the terminal receives unicast information transmitted from the network side and the unicast information is used for indicating discarding PDU in case of the presence of network congestion, and then the terminal may discard PDU based on the unicast information.

In an embodiment, the terminal may first receive the first message, and determine that PDU may be discarded in case of the network congestion based on the first message. The terminal may perform the network congestion measurement to obtain the network congestion measurement result, and discard PDU in case that the terminal determines the presence of network congestion based on the network congestion measurement result.

In an embodiment, the terminal may first receive the first message, and determine that PDU may be discarded in case of network congestion based on the first message. The terminal may perform the interference measurement to obtain the interference measurement result, and determine the presence of network congestion and discard PDU in case that the interference value determined based on the interference measurement result is greater than the interference threshold.

In an embodiment, the terminal may first receive the first message, and determine that PDU may be discarded in case of network congestion based on the first message. The terminal may perform the interference measurement and obtain the interference value being 10. In case that the interference threshold is 5, the terminal may determine the presence of network congestion and discard PDU since the interference value determined based on the interference measurement is greater than the interference threshold.

In an embodiment, the terminal may first receive the first message, and determine that PDU may be discarded in case of network congestion based on the first message. The terminal may perform the SINR measurement to obtain the SINR measurement result, and determine the presence of network congestion and discard PDU in case that the SINR determined based on the SINR measurement result is less than the SINR threshold.

In an embodiment, the terminal may first receive the first message, and determine that PDU may be discarded in case of network congestion based on the first message. The terminal may perform the SINR measurement and obtain the SINR value being 100 dB. In case that the SINR threshold is 90 dB, the terminal may determine the presence of network congestion and discard PDU since the SINR value determined based on the SINR measurement is greater than the SINR threshold.

In an embodiment, the buffer status of the terminal may be used by the terminal to inform the network side of how much data of the terminal currently exists and needs to be transmitted, and to request the network side to allocate the uplink resource.

In an embodiment, the terminal may report the buffer status of the terminal to the network side, such as reporting a buffer status report (BSR). The terminal may determine the presence of network congestion in case that the terminal is not allocated with an uplink resource within the given period, and discard PDU based on the first message.

In an embodiment, in case that the given period is 10 s, the terminal may wait for 10 s after reporting the buffer status to the network side and determine the presence of network congestion in case that the terminal is not allocated with an uplink resource within 10 s.

In an embodiment, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding remaining PDU in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, the PDU set may be a packet data unit set, and one PDU set may include multiple PDUs.

In an embodiment, in case that partial PDUs in the PDU set are lost, the application layer cannot restore the service data even if other PDUs in the PDU set are transmitted successfully, and the terminal may discard the other PDUs in the PDU set.

In an embodiment, after receiving the first message transmitted from the network side, the terminal may, based on the execution rule for PDU discarding in the first message, discard PDU not being transmitted in the first PDU set in case that one or more PDUs in the first PDU set fail to be transmitted.

In an embodiment, the network side may determine the execution rule for PDU discarding as follow: discarding PDUs not being transmitted in the first PDU set in case that one or more PDUs in the first PDU set fail to be transmitted, and then the network side transmits the first message including the execution rule for PDU discarding to the terminal.

In an embodiment, after receiving the first message transmitted from the network side, the terminal may, based on the execution rule for PDU discarding in the first message, discard PDU not being transmitted in the second PDU set in case that a number N of PDUs in the second PDU set fail to be transmitted, where N is determined based on the packet loss characteristic of the terminal, predefined by the protocol, or indicated by the network side.

In an embodiment, the network side may determine the execution rule for PDU discarding as follow: discarding PDUs not being transmitted in the second PDU set in case that a number 3 of PDUs in the second PDU set fail to be transmitted, and then the network side transmits the first message including the execution rule for PDU discarding to the terminal. After receiving the first message transmitted from the network side, the terminal may, based on the execution rule for PDU discarding in the first message, discard PDU not being transmitted in the second PDU set in case that a number 3 of PDUs in the second PDU set fail to be transmitted.

In an embodiment, after receiving the first message transmitted from the network side, the terminal may, based on the execution rule for PDU discarding in the first message, discard PDU not being transmitted in the third PDU set in case that x% of PDUs in the third PDU set are lost, where x is determined based on the packet loss characteristic of the terminal, predefined by the protocol, or indicated by the network side.

In an embodiment, the network side may determine the execution rule for PDU discarding as follow: discarding PDUs not being transmitted in the third PDU set in case that 10% of PDUs in the third PDU set are lost, and then the network side transmits the first message including the execution rule for PDU discarding to the terminal. After receiving the first message transmitted from the network side, the terminal may, based on the execution rule for PDU discarding in the first message, discard PDU not being transmitted in the third PDU set in case that 10% of PDUs in the third PDU set are lost.

In an embodiment, in case that partial PDUs in the PDU set are transmitted successfully, the requirements for the application layer to restore the service data are met, and the terminal may discard the partial PDUs in the PDU set to improve the system capacity.

In an embodiment, after receiving the first message transmitted from the network side, the terminal may, based on the execution rule for PDU discarding in the first message, discard PDU not being transmitted in the fourth PDU set in case that a number M of PDUs in the fourth PDU set are transmitted successfully, where M is determined based on the packet loss characteristic of the terminal, predefined by the protocol, or indicated by the network side.

In an embodiment, the network side may determine the execution rule for PDU discarding as follow: discarding PDUs not being transmitted in the fourth PDU set in case that a number 10 of PDUs in the fourth PDU set are transmitted successfully. After receiving the first message transmitted from the network side, the terminal may, based on the execution rule for PDU discarding in the first message, discard PDU not being transmitted in the fourth PDU set in case that a number 10 of PDUs in the fourth PDU set are transmitted successfully.

In an embodiment, after receiving the first message transmitted from the network side, the terminal may, based on the execution rule for PDU discarding in the first message, discard PDU not being transmitted in the fifth PDU set in case that one or more PDUs in the fifth PDU set are transmitted successfully.

In an embodiment, the network side may determine the execution rule for PDU discarding as follow: discarding PDUs not being transmitted in the fifth PDU set in case that one or more PDUs in the fifth PDU set are transmitted successfully.

In an embodiment, after receiving the first message transmitted from the network side, the terminal may, based on the execution rule for PDU discarding in the first message, discard PDU not being transmitted in the sixth PDU set in case that y% of PDUs in the sixth PDU set are transmitted successfully, where y is determined based on the packet loss characteristic of the terminal, predefined by the protocol, or indicated by the network side.

In an embodiment, the network side may determine the execution rule for PDU discarding as follow: discarding PDUs not being transmitted in the sixth PDU set in case that 10% of PDUs in the sixth PDU set are transmitted successfully. After receiving the first message transmitted from the network side, the terminal may, based on the execution rule for PDU discarding included in the six message, discard PDU not being transmitted in the sixth PDU set in case that 10% of PDUs in the sixth PDU set are transmitted successfully.

In an embodiment, the terminal may receive the first message transmitted from the network side, and the first message may include the PDU set based PDCP discard timer configured by the network side. After the PDCP discard timer expires, the terminal may discard PDU set with the PDU set importance level lower than the PDU set importance level threshold in the DRB or LCH allowing the execution of PDU discarding.

In an embodiment, the network side may configure the PDU set based PDCP discard timer and determine the execution rule for PDU discarding as follow: discarding PDU set with the PDU set importance level lower than the PDU set importance level threshold in the DRB or LCH allowing the execution of PDU discarding after the PDCP discard timer expires.

In an embodiment, discarding the PDU includes one or more of following:
discarding a PDU set in which the PDU is included; or
discarding PDU, where the PDU is one or more PDUs in the PDU set.

In an embodiment, the terminal may receive the first message transmitted from the network side and then discard PDU set based on the first message.

In an embodiment, the terminal may receive the first message transmitted from the network side and discard PDU set based on the first message.

In an embodiment, the terminal may receive the first message transmitted from the network side and discard one or more PDUs in the PDU set based on the first message.

In an embodiment, discarding the PDU set in which the PDU is included includes:
determining, based on the PDU set importance, a PDU set with lowest importance level or with an importance level lower than a PDU set importance level threshold as the PDU set to be discarded; and
discarding the PDU set.

In an embodiment, the terminal may determine the PDU set with the lowest importance level as the PDU set to be discarded based on the PDU set importance.

In an embodiment, in case that the terminal receives the first message transmitted from the network side, the terminal may discard PDU set with the lowest importance level based on the first message. For example, the terminal includes PDU set A, PDU set B, and PDU set C, where the importance level of PDU set A is 3, the importance level of PDU set B is 2, and the importance level of PDU set C is 1. The terminal may determine PDU set C as the PDU set to be discarded. In case of receiving the first message transmitted from the network side, the terminal may discard PDU set C based on the first message.

In an embodiment, the terminal may determine the PDU set with the importance level lower than the PDU set importance level threshold as the PDU set to be discarded based on the PDU set importance. In case of receiving the first message transmitted from the network side, the terminal may discard the PDU set with the importance level based on a given level threshold based on the first message.

For example, the terminal includes PDU set A, PDU set B, and PDU set C, where the importance level of PDU set A is 3, the importance level of PDU set B is 2, and the importance level of PDU set C is 1. The terminal may determine PDU set C as the PDU set to be discarded in case that the PDU set importance level threshold is 2. In case of receiving the first message transmitted from the network side, the terminal may discard PDU set C based on the first message.

In an embodiment, discarding the PDU includes one or more of following:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, where P is determined based on a packet loss characteristic of the terminal, predefined by the protocol, or indicated by the network side;
discarding PDUs not being transmitted in a ninth PDU set in case that z% of PDUs in the ninth PDU set are lost, where z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, where Q is determined based on a packet loss characteristic of the terminal, predefined by the protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, where w is determined based on the packet loss characteristic of the terminal, predefined by the protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based PDCP discard timer, configured by the network side expires, where the discarded PDU set is a PDU set with a PDU set importance level lower than a PDU set importance level threshold in a DRB or an LCH allowing the execution of PDU discarding.

In an embodiment, after receiving the first message transmitted from the network side, the terminal may discard PDU set or one or more PDUs in the PDU set based on the execution rule for PDU discarding in the first message.

In an embodiment, after receiving the first message transmitted from the network side, the terminal may discard PDU not being transmitted in the seventh PDU set in case that one or more PDUs in the seventh PDU set fail to be transmitted.

In an embodiment, after receiving the first message transmitted from the network side, the terminal may discard PDU not being transmitted in the eighth PDU set in case that a number P of PDUs in the eighth PDU set fail to be transmitted, where P is determined based on the packet loss characteristic of the terminal, predefined by the protocol, or indicated by the network side.

In an embodiment, the network side may add indication information to the first message based on the packet loss characteristic of the terminal, and then transmit the first message to the terminal, where the indication information is used for indicating, in case that a number 10 of PDUs in the eighth PDU set fail to be transmitted, discarding remaining PDU in the eighth PDU set by the terminal. After receiving the first message transmitted from the network side, the terminal may discard PDU not being transmitted in the eighth PDU set in case that a number 10 of PDUs in the eighth PDU set fail to be transmitted.

In an embodiment, after receiving the first message transmitted from the network side, the terminal may discard PDU not being transmitted in the ninth PDU set in case that z% of PDUs in the ninth PDU set are lost, where z is determined based on the packet loss characteristic of the terminal, predefined by the protocol, or indicated by the network side.

In an embodiment, the network side may add indication information to the first message and then transmit the first message to the terminal, where the indication information is used for indicating, in case that 10% of PDUs in the ninth PDU set are lost, discarding PDUs not being transmitted in the ninth PDU set by the terminal. After receiving the first message transmitted from the network side, the terminal may discard PDU not being transmitted in the ninth PDU set in case that 10% of PDUs in the ninth PDU set are lost.

In an embodiment, after receiving the first message transmitted from the network side, the terminal may discard PDU not being transmitted in the tenth PDU set in case that a number Q of PDUs in the tenth PDU set are transmitted successfully, where Q is determined based on the packet loss characteristic of the terminal, predefined by the protocol, or indicated by the network side.

In an embodiment, the network side may add indication information to the first message and then transmit the first message to the terminal, where the indication information is used for indicating, in case that a number 10 of PDUs in the tenth PDU set are transmitted successfully, discarding PDUs not being transmitted in the tenth PDU set by the terminal. After receiving the first message transmitted from the network side, the terminal may discard PDU not being transmitted in the tenth PDU set in case that a number 10 of PDUs in the tenth PDU set are transmitted successfully.

In an embodiment, after receiving the first message transmitted from the network side, the terminal may discard PDU not being transmitted in the eleventh PDU set in case that one or more PDUs in the eleventh PDU set are transmitted successfully.

In an embodiment, after receiving the first message transmitted from the network side, the terminal may discard PDU not being transmitted in the twelfth PDU set in case that w% of PDUs in the twelfth PDU set are transmitted successfully, where w is determined based on the packet loss characteristic of the terminal, predefined by the protocol, or indicated by the network side.

In an embodiment, the network side may add indication information to the first message and then transmit the first message to the terminal, where the indication information is used for indicating, in case that 10% of PDUs in the twelfth PDU set are transmitted successfully, discarding PDUs not being transmitted in the twelfth PDU set by the terminal. After receiving the first message transmitted from the network side, the terminal may discard PDU not being transmitted in the twelfth PDU set in case that 10% of PDUs in the twelfth PDU set are transmitted successfully.

In an embodiment, after receiving the first message transmitted from the network side, the terminal may discard PDU not being transmitted in case that the available uplink resource cannot carry the PDU not being transmitted.

In an embodiment, after receiving the first message transmitted from the network side, the terminal may discard PDU not being transmitted in case that a pre-configured resource and/or a dynamically scheduled resource cannot carry the PDU not being transmitted.

In an embodiment, after receiving the first message transmitted from the network side, the terminal may discard the first given proportion of PDUs from PDU not being transmitted in the thirteenth PDU set.

In an embodiment, the network side may add indication information to the first message and then transmit the first message to the terminal, where the indication information is used for indicating discarding, by the terminal, 50% of PDU from PDU not being transmitted in the thirteenth PDU set. After receiving the first message transmitted from the network side, the terminal may discard 50% of PDU from PDU not being transmitted in the thirteenth PDU set.

In an embodiment, after receiving the first message transmitted from the network side, the terminal may discard the second given proportion of PDUs from all PDUs to be transmitted.

In an embodiment, the network side may add indication information to the first message and then transmit the first message to the terminal, where the indication information is used for indicating discarding, by the terminal, 30% of PDU from all PDUs to be transmitted. After receiving the first message transmitted from the network side, the terminal may discard 30% of PDU from all PDUs to be transmitted.

In an embodiment, the terminal may receive the first message transmitted from the network side, where the first message may include the PDU set based PDCP discard timer configured by the network side. After the PDCP discard timer expires, the terminal may discard PDU set with the PDU set importance level lower than the PDU set importance level threshold in the DRB or LCH allowing the execution of PDU discarding.

In an embodiment, the network side may configure the PDU set based PDCP discard timer and determine the execution rule for PDU discarding as follow: discarding PDU set with the PDU set importance level lower than the PDU set importance level threshold in the DRB or LCH allowing the execution of PDU discarding after the PDCP discard timer expires.

In an embodiment of the present application, taking the network side as a base station as an example, the terminal may receive a MAC-CE for PDU discarding transmitted from the base station and start PDU discarding, including following steps.

Step 1: The base station transmits configuration information for initiating PDU discarding to the terminal via RRC dedicated signaling, where the configuration information includes one or more of following: the DRB ID or LCH ID allowing the execution of PDU discarding; or a condition for discarding the uplink PDU.

The terminal receives the RRC signaling transmitted from the base station side and obtains the PDU discarding configuration information.

Step 2: The base station transmits the MAC-CE for PDU discarding to the terminal in case of detecting the presence of network congestion, for indicating performing uplink PDU discarding by the terminal, where the MAC-CE for PDU discarding includes one or more of following.
1. FIG. 4 is a first schematic diagram of a format of a MAC-CE according to an embodiment of the present application. Referring to FIG. 4, the MAC-CE only includes one MAC sub-header, and the LCID of the MAC sub-header indicates that the MAC-CE is used to indicate PDU discarding. The terminal starts PDU discarding on all DRBs or logical channels configured in Step 1 when receiving the MAC-CE.
2. FIG. 5 is a second schematic diagram of a format of a MAC-CE according to an embodiment of the present application. Referring to FIG. 5, the MAC-CE only includes one MAC sub-header and DRB/LCH indication information, where the LCID of the MAC sub-header indicates that the MAC-CE is used to indicate PDU discarding. The DRB/LCH indication information is a bitmap (different bits in the bitmap correspond to the DRB or LCH indicated by Step 1) corresponding to the DRB or logical channel. The terminal starts PDU discarding on the DRB or logical channel indicated by the MAC-CE when receiving the MAC-CE.
3. FIG. 6 is a third schematic diagram of a format of a MAC-CE according to an embodiment of the present application. Referring to FIG. 6, the MAC-CE only includes one MAC sub-header and DRB indication information, where the LCID of the MAC sub-header indicates that the MAC-CE is used to indicate PDU discarding. The DRB indication information is a DRB index. The terminal starts PDU discarding on the DRB indicated by the MAC-CE when receiving the MAC-CE.

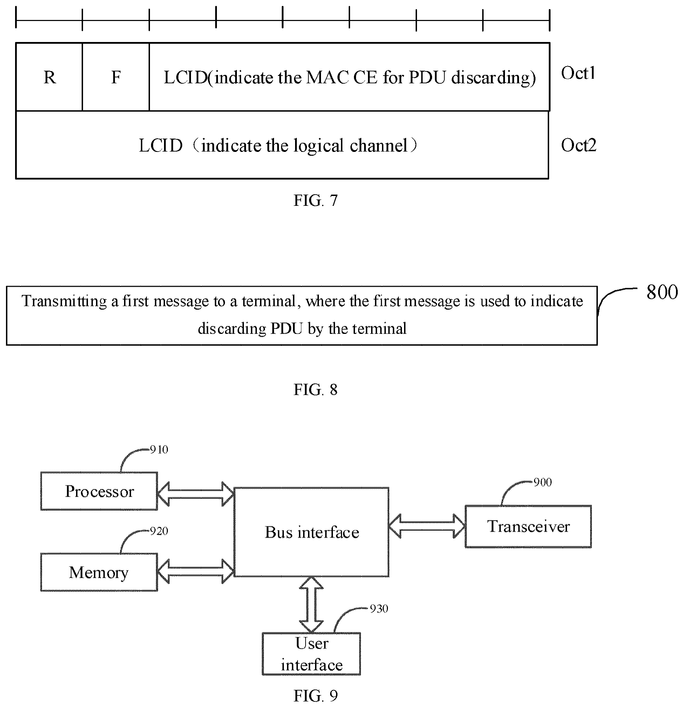

4. FIG. 7 is a fourth schematic diagram of a format of a MAC-CE according to an embodiment of the present application. Referring to FIG. 7, the MAC-CE only includes one MAC sub-header and LCH indication information, where the LCID of the MAC sub-header indicates that the MAC-CE is used to indicate PDU discarding. The LCH indication information is a logical channel number. The terminal starts PDU discarding on the logical channel indicated by the MAC-CE when receiving the MAC-CE.

The terminal receives the MAC-CE transmitted from the base station side, where the MAC-CE is used to indicate PDU discarding and starting the PDU discarding on the DRB or logical channel of the terminal.

Step 3: The terminal performs PDU discarding in case that the discarding condition in the execution rule for PDU discarding is met.

In an embodiment of the present application, taking the network side as a base station as an example, the terminal may receive physical layer signaling transmitted from the base station and start PDU discarding, including following steps.

Step 1: The base station transmits configuration information for starting PDU discarding to the terminal via the RRC dedicated signaling, where the configuration information includes one or more of following: the DRB ID or LCH ID allowing the execution of PDU discarding; or a condition for discarding the uplink PDU.

The terminal receives the RRC signaling transmitted from the base station side and obtains the PDU discarding configuration information.

Step 2: The base station transmits the PDCCH to the terminal in case of detecting the presence of network congestion, for indicating starting PDU discarding. In an embodiment, the physical layer signaling may carry the DRB ID or LCH ID allowing the execution of PDU discarding.

The terminal receives the physical layer signaling indicating starting PDU discarding transmitted from the base station side, and starts PDU discarding on the DRB or logical channel of the terminal.

Step 3: The terminal performs PDU discarding in case that the discarding condition in the execution rule for PDU discarding is met.

In an embodiment of the present application, taking the network side as a base station as an example, the terminal may receive the RRC signaling transmitted from the base station and start PDU discarding, including following steps.

Step 1: The base station transmits the configuration information for starting PDU discarding to the terminal via the RRC dedicated signaling in case of detecting the presence of network congestion, where the configuration information includes one or more of following: the DRB ID or LCH ID allowing the execution of PDU discarding; or a condition for discarding the uplink PDU.

The terminal receives the RRC signaling transmitted from the base station side, obtains the PDU discarding configuration information and starts PDU discarding, specifically on the base station configured DRB or logical channel allowing the execution of PDU discarding. In an embodiment, the terminal determines that the network congestion occurs through interference measurement, or SINR measurement, or a situation in which buffer status of the terminal is known to the network side and the terminal is not allocated with an uplink resource within the given period, and the terminal starts PDU discarding, specifically on the base station configured DRB or logical channel allowing the execution of PDU discarding.

Step 2: The terminal performs PDU discarding in case that the discarding condition in the execution rule for PDU discarding is met.

In an embodiment of the present application, taking the network side as a base station as an example, the terminal may receive the broadcast message or the multicast message transmitted from the base station and perform PDU discarding, including following steps.

The terminal side:
Step 1: The base station transmits the system message to inform that PDU discarding is allowed to be performed in the cell, or to inform a group of terminals that PDU discarding is allowed to be performed via the multicast message.

The terminal receives the broadcast or multicast configuration and determines that PDU discarding is allowed to be performed.

Step 2 (optional step): The base station transmits the RRC dedicated signaling to the terminal to configure the DRB or logical channel allowing the execution of PDU discarding.

The terminal receives the RRC signaling and determines the DRB or logical channel allowing the execution of PDU discarding by the terminal.

Step 3: The terminal starts discarding of the uplink data packet after receiving the information allowing the execution of the discarding of the uplink data packet transmitted from the base station side. In an embodiment, the terminal determines that the network congestion occurs through interference measurement, or SINR measurement, or a situation in which buffer status of the terminal is known to the network side and the terminal is not allocated with an uplink resource within the given period, and starts PDU discarding.

Step 4: The terminal performs PDU discarding in case that the condition for PDU discarding is met.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), or a computer with a mobile terminal device, e.g., a portable mobile device, a pocket-sized mobile device, a handheld mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. The wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

FIG. 8 is a second schematic flowchart of a method for discarding packet data unit (PDU) according to an embodiment of the present application. As shown in FIG. 8, an embodiment of the present application provides a method for discarding PDU, and an execution subject of the method is a network side device, such as a base station, etc. The method includes following steps.

Step 800: transmitting a first message to a terminal, where the first message is used to indicate discarding PDU by the terminal.

In an embodiment, the network side may transmit the first message to the terminal for indicating discarding PDU by the terminal.

In an embodiment, the network side may transmit the first message to the terminal for indicating performing an operation of discarding uplink PDU on a specified data radio bearer (DRB) or logical channel.

In an embodiment, the terminal may receive the first message transmitted from the network side for indicating discarding PDU.

In an embodiment, the terminal may receive the first message transmitted from the network side for indicating performing an operation of discarding uplink PDU on a specified DRB or logical channel.

In the method for discarding PDU provided by the embodiment of the present application, by transmitting the message to the terminal for indicating PDU discarding, the terminal may discard uplink PDU of a specified DRB or logical channel under a determined condition, based on the message for PDU discarding, to achieve reasonably control of discarding the uplink data packet by the terminal and balance between the capacity and the service data transmission quality.

In an embodiment, the first message is used to indicate discarding the PDU by the terminal includes:
the first message is used to indicate starting a procedure of PDU discarding by the terminal;
the first message is used to indicate a data radio bearer identity (DRB ID) or logical channel identity (LCH ID) allowing an execution of PDU discarding by the terminal;
the first message is used to indicate a PDU set importance level threshold allowing an execution of PDU discarding by the terminal; or
the first message is used to indicate an execution rule for PDU discarding by the terminal.

In an embodiment, the first message is used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. the execution rule for PDU discarding;
6. starting the procedure of PDU discarding, and the DRB ID or LCH ID allowing the execution of PDU discarding;
7. starting the procedure of PDU discarding, the DRB ID or LCH ID allowing the execution of PDU discarding, and the PDU set importance level threshold allowing the execution of PDU discarding;
8. starting the procedure of PDU discarding, and the execution rule for PDU discarding;
9. the DRB ID or LCH ID allowing the execution of PDU discarding, and the execution rule for PDU discarding;
10. starting the procedure of PDU discarding, and the PDU set importance level threshold allowing the execution of PDU discarding;
11. the PDU set importance level threshold allowing the execution of PDU discarding, and the execution rule for PDU discarding;
12. the DRB ID or LCH ID allowing the execution of PDU discarding, the execution rule for PDU discarding, and the PDU set importance level threshold allowing the execution of PDU discarding;
13. starting the procedure of PDU discarding, the DRB ID or LCH ID allowing the execution of PDU discarding, and the execution rule for PDU discarding; or
14. starting the procedure of PDU discarding, the DRB ID or LCH ID allowing the execution of PDU discarding, the execution rule for PDU discarding, and the PDU set importance level threshold allowing the execution of PDU discarding.

In an embodiment, the network side may transmit the first message to the terminal for indicating starting the procedure of PDU discarding by the terminal.

In an embodiment, the terminal may receive the first message transmitted from the network side, where the first message may indicate starting the procedure of PDU discarding, and then the terminal may determine to start the procedure of PDU discarding based on the first message.

In an embodiment, the network side may transmit the first message to the terminal for indicating the DRB ID or LCH ID allowing the execution of PDU discarding.

In an embodiment, the terminal may receive the first message transmitted from the network side, where the first message may indicate the DRB ID or LCH ID allowing the execution of PDU discarding, and then the terminal may discard PDU of the DRB or LCH corresponding to the DRB ID or LCH ID based on the first message.

In an embodiment, the network side may transmit the first message to the terminal for indicating the PDU set importance level threshold allowing the execution of PDU discarding.

In an embodiment, the terminal may receive the first message transmitted from the network side, where the first message may indicate the PDU set importance level threshold allowing the execution of PDU discarding, and then the terminal may determine an importance level of each PDU set allowing the execution of discarding PDU, based on the first message.

In an embodiment, the network side may transmit the first message to the terminal for indicating the execution rule for PDU discarding.

In an embodiment, the terminal may receive the first message transmitted from the network side, where the first message may indicate the execution rule for PDU discarding, and then the terminal may discard PDU according to the execution rule for PDU discarding based on the first message.

In an embodiment, the network side may transmit the first message to the terminal, where information carried in the first message may include any one or any combination of following: indicating starting the procedure of PDU discarding, indicating the DRB ID or LCH ID allowing the execution of PDU discarding, or indicating the execution rule for PDU discarding, and then the terminal may discard PDU based on the first message.

In an embodiment, where the first message includes dynamic indication information.

In an embodiment, the dynamic indication information may be used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. the execution rule for PDU discarding;
6. starting the procedure of PDU discarding, and the DRB ID or LCH ID allowing the execution of PDU discarding;
7. starting the procedure of PDU discarding, the DRB ID or LCH ID allowing the execution of PDU discarding, and the PDU set importance level threshold allowing the execution of PDU discarding;
8. starting the procedure of PDU discarding, and the execution rule for PDU discarding;
9. the DRB ID or LCH ID allowing the execution of PDU discarding, and the execution rule for PDU discarding;
10. starting the procedure of PDU discarding, and the PDU set importance level threshold allowing the execution of PDU discarding;
11. the PDU set importance level threshold allowing the execution of PDU discarding, and the execution rule for PDU discarding;
12. the DRB ID or LCH ID allowing the execution of PDU discarding, the execution rule for PDU discarding, and the PDU set importance level threshold allowing the execution of PDU discarding;
13. starting the procedure of PDU discarding, the DRB ID or LCH ID allowing the execution of PDU discarding, and the execution rule for PDU discarding; or
14. starting the procedure of PDU discarding, the DRB ID or LCH ID allowing the execution of PDU discarding, the execution rule for PDU discarding, and the PDU set importance level threshold allowing the execution of PDU discarding.

In an embodiment, the network side may transmit dynamic indication information to the terminal for indicating discarding PDU by the terminal.

In an embodiment, the terminal may receive the dynamic indication information transmitted from the network side for indicating PDU discarding and then discard PDU based on the dynamic indication information.

In an embodiment, the network side may transmit dynamic indication information to the terminal, and the terminal may discard PDU based on the dynamic indication information.

In an embodiment, the dynamic indication information includes one or more of following:
a media access control-control element (MAC-CE); or
a physical downlink control channel (PDCCH).

In an embodiment, the MAC-CE may be used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. the execution rule for PDU discarding;
6. starting the procedure of PDU discarding, and the DRB ID or LCH ID allowing the execution of PDU discarding;
7. starting the procedure of PDU discarding, the DRB ID or LCH ID allowing the execution of PDU discarding, and the PDU set importance level threshold allowing the execution of PDU discarding;
8. starting the procedure of PDU discarding, and the execution rule for PDU discarding;
9. the DRB ID or LCH ID allowing the execution of PDU discarding, and the execution rule for PDU discarding;
10. starting the procedure of PDU discarding, and the PDU set importance level threshold allowing the execution of PDU discarding;
11. the PDU set importance level threshold allowing the execution of PDU discarding, and the execution rule for PDU discarding;
12. the DRB ID or LCH ID allowing the execution of PDU discarding, the execution rule for PDU discarding, and the PDU set importance level threshold allowing the execution of PDU discarding;
13. starting the procedure of PDU discarding, the DRB ID or LCH ID allowing the execution of PDU discarding, and the execution rule for PDU discarding; or
14. starting the procedure of PDU discarding, the DRB ID or LCH ID allowing the execution of PDU discarding, the execution rule for PDU discarding, and the PDU set importance level threshold allowing the execution of PDU discarding.

In an embodiment, the network side may transmit the MAC-CE to the terminal, where the MAC-CE may be used to indicate discarding PDU by the terminal.

In an embodiment, the terminal may receive the MAC-CE transmitted from the network side for indicating PDU discarding, and then may discard PDU based on the MAC-CE.

In an embodiment, the network side may transmit the MAC-CE to the terminal, and then the terminal may discard PDU based on the MAC-CE.

In an embodiment, the PDCCH may be used to indicate any of following cases:
1. starting the procedure of PDU discarding;
2. the DRB ID or LCH ID allowing the execution of PDU discarding;
3. the PDU set importance level threshold allowing the execution of PDU discarding;
4. the DRB ID or LCH ID allowing the execution of PDU discarding, and the PDU set importance level threshold allowing the execution of PDU discarding;
5. starting the procedure of PDU discarding, and the DRB ID or LCH ID allowing the execution of PDU discarding;
6. starting the procedure of PDU discarding, and the PDU set importance level threshold allowing the execution of PDU discarding; or
7. starting the procedure of PDU discarding, the DRB ID or LCH ID allowing the execution of PDU discarding, and the PDU set importance level threshold allowing the execution of PDU discarding.

In an embodiment, the network side may transmit the PDCCH to the terminal, where the PDCCH may be used to indicate discarding PDU by the terminal.

In an embodiment, the terminal may receive the PDCCH transmitted from the network side, where the PDCCH may be used to indicate PDU discarding, and then the terminal may discard PDU based on the PDCCH.

In an embodiment, the network side may transmit the PDCCH to the terminal, and then the terminal may discard PDU based on the PDCCH.

In an embodiment, the method for discarding PDU further includes:
transmitting PDU discarding configuration information to the terminal, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, the PDU discarding configuration information may be transmitted from the network side to the terminal, and used to indicate any of following cases:
1. the DRB ID or LCH ID allowing the execution of PDU discarding;
2. the PDU set importance level threshold allowing the execution of PDU discarding;
3. the DRB ID or LCH ID allowing the execution of PDU discarding, and the PDU set importance level threshold allowing the execution of PDU discarding;
4. the execution rule for PDU discarding;
5. the DRB ID or LCH ID allowing the execution of PDU discarding, and the execution rule for PDU discarding;
6. the PDU set importance level threshold allowing the execution of PDU discarding, and the execution rule for PDU discarding; or
7. the DRB ID or LCH ID allowing the execution of PDU discarding, the PDU set importance level threshold allowing the execution of PDU discarding, and the execution rule for PDU discarding.

In an embodiment, the network side may transmit the PDU discarding configuration information to the terminal before transmitting the first message to the terminal.

In an embodiment, the terminal may receive the PDU discarding configuration information transmitted from the network side before receiving the first message transmitted from the network side.

In an embodiment, the network side may transmit the PDU discarding configuration information to the terminal before transmitting the first message to the terminal, and the PDU discarding configuration information may be used to indicate the DRB ID or LCH ID allowing the execution of PDU discarding.

In an embodiment, the terminal may receive the PDU discarding configuration information transmitted from the network side before receiving the first message transmitted from the network side, where the PDU discarding configuration information may be used to indicate the DRB ID or LCH ID allowing the execution of PDU discarding. The terminal may determine the DRB or LCH allowing the execution of PDU discarding based on the PDU discarding configuration information, and in case that the PDU set importance level threshold allowing the execution of PDU discarding is further included, only the PDU with an importance level lower than the indicated importance level may be discarded.

In an embodiment, after transmitting the PDU discarding configuration information to the terminal, the network side may transmit the first message which may not indicate the DRB ID or LCH ID allowing the execution of PDU discarding to the terminal. The terminal may perform an operation of PDU discarding on the DRB or LCH corresponding to the DRB ID or LCH ID allowing the execution of PDU discarding indicated by the PDU discarding configuration information, and in case that the PDU set importance level threshold allowing the execution of PDU discarding is further included, only the PDU with an importance level lower than the indicated importance level may be discarded.

For example, the network side may transmit the PDU discarding configuration information to the terminal, and the PDU discarding configuration information may indicate that the DRBs on which PDU discarding is allowed are DRB A, DRB B, and DRB C. The network side may transmit the first message to the terminal, and the first message may not indicate the DRB ID or LCH ID allowing the execution of PDU discarding. The terminal may perform an operation of PDU discarding on DRB A, DRB B, and DRB C, and in case that the PDU discarding configuration information further includes the PDU set importance level threshold allowing the execution of PDU discarding and the PDU importance level of the DRB A is lower than the indicated importance level, only the PDU in DRB A are discarded.

In an embodiment, the network side may transmit the PDU discarding configuration information to the terminal, and the PDU discarding configuration information may indicate the DRB ID or LCH ID allowing the execution of PDU discarding, and then the network side may transmit the first message to the terminal, and the first message may indicate, in a bitmap or index number manner, that one or more DRBs or LCHs among the DRBs or LCHs corresponding to the DRB IDs or LCH IDs indicated by the PDU discarding configuration information allow the execution of PDU discarding. The terminal may perform an operation of PDU discarding on one or more DRBs or LCHs indicated by the first message. In case that the PDU set importance level threshold allowing the execution of PDU discarding is further included, only the PDU with an importance level lower than the indicated importance level may be discarded.

For example, the network side may transmit the PDU discarding configuration information to the terminal, and the PDU discarding configuration information may indicate that the DRBs on which PDU discarding is allowed are DRB A, DRB B, and DRB C. The network side may transmit the first message to the terminal, and the first message may indicate discarding PDU in DRB A and DRB B in a bitmap manner. The terminal may perform an operation of PDU discarding on DRB A, and DRB B, and in case that the PDU discarding configuration information further includes the PDU set importance level threshold allowing the execution of PDU discarding and the PDU importance level of the DRB A is lower than the indicated importance level, only the PDU in DRB A are discarded.

In an embodiment, before transmitting the first message to the terminal, the network side may transmit the PDU discarding configuration information to the terminal, where the PDU discarding configuration information may be used to indicate the execution rule for PDU discarding.

In an embodiment, before receiving the first message transmitted from the network side, the terminal may receive the PDU discarding configuration information transmitted from the network side for indicating the execution rule for PDU discarding.

In an embodiment, the network side may transmit the PDU discarding configuration information to the terminal and then transmit the first message to the terminal. The terminal may discard PDU based on the PDU discarding configuration information and the first message.

In an embodiment, the first message includes a broadcast message, a multicast message, or a unicast message;
where the first message is further used to indicate a presence of network congestion or to indicate discarding PDU in case of a presence of network congestion.

In an embodiment, the network side may transmit, to the terminal, the broadcast message for indicating discarding PDU by the terminal in case of the presence of network congestion.

In an embodiment, the terminal may receive the broadcast message transmitted from the network side, and then determine to discard PDU in case of the presence of network congestion based on the broadcast message.

In an embodiment, the network side may introduce a new system message for transmitting, to all terminals in the cell, the broadcast message indicating discarding PDU by the terminal in case of the presence of network congestion.

In an embodiment, the terminal may receive the broadcast message transmitted from the network side via the new system message, and discard PDU in case of the presence of network congestion based on the broadcast message.

In an embodiment, the network side may transmit information for indicating the DRB ID or LCH ID allowing the execution of PDU discarding to the terminal via the unicast RRC signaling.

In an embodiment, the terminal may receive the broadcast message and unicast RRC signaling transmitted from the network side via the new system message, and the unicast RRC signaling may be used to the indicate the DRB ID or LCH ID allowing the execution of PDU discarding. The terminal may discard PDU in case of the presence of network congestion based on the broadcast message and the DRB ID or LCH ID allowing the execution of PDU discarding.

In an embodiment, the network side may transmit the multicast message to the terminal, where the multicast message may be used to indicate discarding PDU by the terminal in case of the presence of network congestion.

In an embodiment, the network side may configure a group-RNTI for a group of terminals, and use the group-RNTI to transmit the multicast message to all terminals in the group. The multicast message may be used to indicate discarding PDU by the terminal in case of the presence of network congestion.

In an embodiment, the terminal may receive the multicast message transmitted from the network side, and discard PDU in case of the presence of network congestion based on the multicast message.

In an embodiment, the terminal may receive the multicast message transmitted from the network side via a group-radio network temporary identity (RNTI), and discard PDU in case of the presence of network congestion based on the multicast message.

In an embodiment, the terminal may receive the multicast message and unicast RRC signaling transmitted from the network side via the group-RNTI, where the unicast RRC signaling may be used to indicate the DRB ID or LCH ID allowing the execution of PDU discarding. The terminal may discard PDU in case of the presence of network congestion based on the multicast message and the DRB ID or LCH ID allowing the execution of PDU discarding.

In an embodiment, the network side may transmit the unicast message to the terminal via the unicast RRC signaling, where the unicast message may be used to indicate discarding PDU by the terminal in case of the presence of network congestion.

In an embodiment, the terminal may receive the unicast message transmitted from the network side, and discard PDU in case of the presence of network congestion based on the unicast message.

In an embodiment, the terminal may receive the unicast message transmitted from the network side via the unicast RRC signaling, and discard PDU in case of the presence of network congestion based on the unicast message.

In an embodiment, the terminal may receive the unicast message and the DRB ID or LCH ID allowing the execution of PDU discarding transmitted from the network side via the unicast RRC signaling, and discard PDU in case of the presence of network congestion based on the unicast message and the DRB ID or LCH ID allowing the execution of PDU discarding.

In an embodiment, the execution rule for PDU discarding includes one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, the network side may determine the execution rule for PDU discarding as follow: discarding PDUs not being transmitted in the first PDU set in case that one or more PDUs in the first PDU set fail to be transmitted, and then the network side transmits the first message including the execution rule for PDU discarding to the terminal.

In an embodiment, after receiving the first message transmitted from the network side, the terminal may, based on the execution rule for PDU discarding in the first message, discard PDU not being transmitted in the first PDU set in case that one or more PDUs in the first PDU set fail to be transmitted.

In an embodiment, the network side may determine the execution rule for PDU discarding as follow: discarding PDUs not being transmitted in the second PDU set in case that a number N of PDUs in the second PDU set fail to be transmitted.

In an embodiment, the network side may determine the execution rule for PDU discarding as follow: discarding PDUs not being transmitted in the second PDU set in case that a number 3 of PDUs in the second PDU set fail to be transmitted, and then the network side transmits the first message including the execution rule for PDU discarding to the terminal. After receiving the first message transmitted from the network side, the terminal may, based on the execution rule for PDU discarding in the first message, discard PDU not being transmitted in the second PDU set in case that a number 3 of PDUs in the second PDU set fail to be transmitted.

In an embodiment, the network side may determine the execution rule for PDU discarding as follow: discarding PDUs not being transmitted in the third PDU set in case that x% of PDUs in the third PDU set are lost.

In an embodiment, the network side may determine the execution rule for PDU discarding as follow: discarding PDUs not being transmitted in the third PDU set in case that 10% of PDUs in the third PDU set are lost, and then the network side transmits the first message including the execution rule for PDU discarding to the terminal. After receiving the first message transmitted from the network side, the terminal may, based on the execution rule for PDU discarding in the first message, discard PDU not being transmitted in the third PDU set in case that 10% of PDUs in the third PDU set are lost.

In an embodiment, the network side may determine the execution rule for PDU discarding as follow: discarding PDUs not being transmitted in the fourth PDU set in case that a number M of PDUs in the fourth PDU set are transmitted successfully.

In an embodiment, the network side may determine the execution rule for PDU discarding as follow: discarding PDUs not being transmitted in the fourth PDU set in case that a number 10 of PDUs in the fourth PDU set are transmitted successfully. After receiving the first message transmitted from the network side, the terminal may, based on the execution rule for PDU discarding in the first message, discard PDU not being transmitted in the fourth PDU set in case that a number 10 of PDUs in the fourth PDU set are transmitted successfully.

In an embodiment, the network side may determine the execution rule for PDU discarding as follow: discarding PDUs not being transmitted in the fifth PDU set in case that one or more PDUs in the fifth PDU set are transmitted successfully.

In an embodiment, after receiving the first message transmitted from the network side, the terminal may, based on the execution rule for PDU discarding in the first message, discard PDU not being transmitted in the fifth PDU set in case that one or more PDUs in the fifth PDU set are transmitted successfully.

In an embodiment, the network side may determine the execution rule for PDU discarding as follow: discarding PDUs not being transmitted in the sixth PDU set in case that y% of PDUs in the sixth PDU set are transmitted successfully.

In an embodiment, the network side may determine the execution rule for PDU discarding as follow: discarding PDUs not being transmitted in the sixth PDU set in case that 10% of PDUs in the sixth PDU set are transmitted successfully. After receiving the first message transmitted from the network side, the terminal may, based on the execution rule for PDU discarding in the six message, discard PDU not being transmitted in the sixth PDU set in case that 10% of PDUs in the sixth PDU set are transmitted successfully.

In an embodiment, the network side may configure the PDU set based PDCP discard timer and determine the execution rule for PDU discarding as follow: discarding PDU set with the PDU set importance level lower than the PDU set importance level threshold in the DRB or LCH allowing the execution of PDU discarding after the PDCP discard timer expires.

In an embodiment, the terminal may receive the first message transmitted from the network side, and the first message may include the PDU set based PDCP discard timer configured by the network side. After the PDCP discard timer expires, the terminal may discard PDU set with the PDU set importance level lower than the PDU set importance level threshold in the DRB or LCH allowing the execution of PDU discarding.

The network device in the embodiments of the present application may be a base station, and the base station may include multiple cells providing services for the terminal. Depending on the specific scenario, the base station may be called an access point, or a device communicating with the wireless terminal device through one or more sectors on the air interface in the access network, or other names. The network device may be used for exchanging the received air frames with Internet Protocol (IP) packets, and act as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communication (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be arranged to be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combination, MIMO transmission may be 2D-MIMO, 3D-MIMO, FD-MIMO or massive-MIMO, and may also be diversity transmission, pre-coding transmission, beamforming transmission, etc.

FIG. 9 is a schematic structural diagram of a terminal according to an embodiment of the present application, As shown in FIG. 9, a terminal includes: a memory 920, a transceiver 900, and a processor 910;
where the memory 920 is used for storing a computer program; the transceiver 900 is used for transmitting and receiving data under control of the processor 910; and the processor 910 is used for reading the computer program in the memory 920 and performing following operations:
receiving a first message transmitted from a network side, where the first message is used to indicate discarding PDU; and
discarding the PDU based on the first message.

In an embodiment, the transceiver 900 is used for transmitting and receiving data under the control of the processor 910.

In FIG. 9, a bus architecture may include any number of interconnected buses and bridges, which are linked together through various circuits of one or more processors represented by the processor 910 and one or more memories represented by the memory 920. The bus architecture may also link various other circuits together, such as peripherals, voltage regulators, and power management circuits, etc., which are well known in the art, and therefore are not further described in the present application. The bus interface provides an interface. The transceiver 900 may include multiple elements, i.e., including a transmitter and a receiver, for providing units for communicating with various other devices over transmission media including wireless channels, wired channels, fiber optic cables, and the like. For different user equipments, a user interface 930 may be an interface with a capability of connecting external and internal devices, including but are not limited to keypads, displays, speakers, microphones, joysticks, etc.

The processor 910 is responsible for managing the bus architecture and general processing, and the memory 920 may store data used by the processor 910 when performing operations.

In some embodiments, the processor 910 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods provided by the embodiments of the present application according to the obtained executable instructions. The processor and the memory may also be arranged to be physically separated.

In an embodiment, the processor 910 is used to indicate one or more of flowing:
starting a procedure of PDU discarding;
a data radio bearer identity (DRB ID) or logical channel identity (LCH ID) allowing an execution of PDU discarding;
a PDU set importance level threshold allowing an execution of PDU discarding; or
an execution rule for PDU discarding.

In an embodiment, the first message includes dynamic indication information.

In an embodiment, the dynamic indication information includes one or more of following:
a media access control-control element (MAC-CE); or
a physical downlink control channel (PDCCH).

In an embodiment, the processor 910 is used for:
obtaining PDU discarding configuration information, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, the first message includes a broadcast message, a multicast message, or a unicast message.

In an embodiment, the processor 910 is used for:
indicating discarding PDU in case of a presence of network congestion.

In an embodiment, the processor 910 is used for:
determining the presence of network congestion.

In an embodiment, the processor 910 is used to perform one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio (SINR) measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

In an embodiment, the processor 910 is used for one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, the processor 910 is used for one or more of following:
discarding a PDU set in which the PDU is included; or
discarding PDU, where the PDU is one or more PDUs in a PDU set.

In an embodiment, the processor 910 is used for:
determining, based on PDU set importance, a PDU set with lowest importance level or with an importance level lower than a PDU set importance level threshold as the PDU set to be discarded; and
discarding the PDU set.

In an embodiment, the processor 910 is used for one or more of following:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, where P is determined based on a packet loss characteristic of the terminal, predefined by a protocol, or indicated by the network side;
discarding PDUs not being transmitted in a ninth PDU set in case that z% of PDUs in the ninth PDU set are lost, where z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, where Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, where w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol (PDCP) discard timer configured by the network side expires, where the discarded PDU set is a PDU set with a PDU set importance level lower than a PDU set importance level threshold in a DRB or an LCH allowing the execution of PDU discarding.

It should be noted here that the above-mentioned terminal provided by the embodiments of the present application may implement all the method steps implemented by the above-mentioned method embodiment with the terminal as the execution subject, and may achieve the same effects. The same parts and beneficial effects in the embodiments as those in the method embodiments are not described in detail.

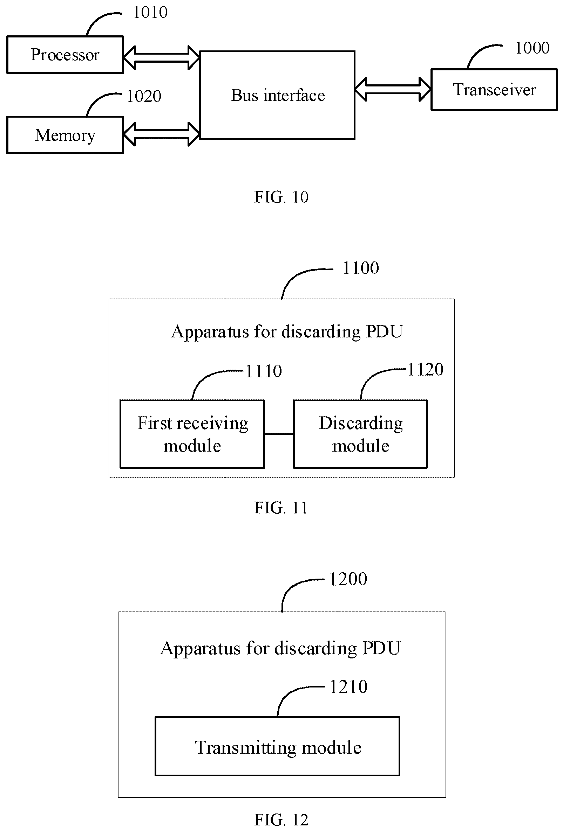

FIG. 10 is a schematic structural diagram of a network side device according to an embodiment of the present application. As shown in FIG. 10, a network side device includes: a memory 1020, a transceiver 1000, and a processor 1010;
where the memory 1020 is used for storing a computer program; the transceiver 1000 is used for transmitting and receiving data under control of the processor 1010; and the processor 1010 is used for reading the computer program in the memory 1020 and performing following operations:
transmitting a first message to a terminal, where the first message is used to indicate discarding PDU by the terminal.

In an embodiment, the transceiver 1000 is used for transmitting and receiving data under the control of the processor 1010.

In FIG. 10, a bus architecture may include any number of interconnected buses and bridges, which are linked together through various circuits of one or more processors represented by the processor 1010 and one or more memories represented by the memory 1020. The bus architecture may also link various other circuits together, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, for providing units for communicating with various other devices over transmission media including wireless channels, wired channels, fiber optic cables, and the like. The processor 1010 is responsible for managing the bus architecture and general processing, and the memory 1020 may store data used by the processor 1010 when performing operations.

In an embodiment, the processor 1010 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods provided by the embodiments of the present application according to the obtained executable instructions. The processor and the memory may also be arranged to be physically separated.

In an embodiment, the processor 1010 is further used to transmit one or more of flowing:
indicating starting a procedure of PDU discarding by the terminal;
indicating a data radio bearer identity (DRB ID) or logical channel identity (LCH ID) allowing an execution of PDU discarding by the terminal;
indicating a PDU set importance level threshold allowing an execution of PDU discarding by the terminal; or
indicating an execution rule for PDU discarding by the terminal.

The first message includes dynamic indication information.

In an embodiment, the dynamic indication information includes one or more of following:
a media access control-control element (MAC-CE); or
a physical downlink control channel (PDCCH).

In an embodiment, the processor 1010 is further used for:
transmitting PDU discarding configuration information to the terminal, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, the first message includes a broadcast message, a multicast message, or a unicast message.

In an embodiment, the processor 1010 is further used to indicate a presence of network congestion or to indicate discarding PDU in case of a presence of network congestion.

In an embodiment, the processor 1010 is further used to perform one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

It should be noted here that the above-mentioned network side device provided by the embodiments of the present application may implement all the method steps implemented by the above-mentioned method embodiment with the network side device as the execution subject, and may achieve the same effects. The same parts and beneficial effects in the embodiments as those in the method embodiments are not described in detail.

FIG. 11 is a first schematic structural diagram of an apparatus for discarding packet data unit (PDU) according to an embodiment of the present application, As shown in FIG. 11, an apparatus 1100 for discarding PDU includes: a first receiving module 1110, and a discarding module 1120,
where the first receiving module 1110 is used for receiving a first message transmitted from a network side, where the first message is used to indicate discarding PDU; and
the discarding module 1120 is used for discarding the PDU based on the first message.

In an embodiment, the first receiving module 1110 is used to indicate one or more of following:
starting a procedure of PDU discarding;
a data radio bearer identity (DRB ID) or logical channel identity (LCH ID) allowing an execution of PDU discarding;
a PDU set importance level threshold allowing an execution of PDU discarding; or
an execution rule for PDU discarding.

In an embodiment, the first message includes dynamic indication information.

In an embodiment, the dynamic indication information includes one or more of following:
a media access control-control element (MAC-CE); or
a physical downlink control channel (PDCCH).

In an embodiment, the apparatus further includes:
an obtaining module, used for obtaining PDU discarding configuration information, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, the first message includes a broadcast message, a multicast message, or a unicast message.

In an embodiment, the first receiving module 1110 is used for:
indicating a presence of network congestion or to indicate discarding PDU in case of a presence of network congestion.

In an embodiment, the apparatus further includes:
a determining module, used for determining the presence of network congestion.

In an embodiment, the determining module is used for one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio (SINR) measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

In an embodiment, the receiving module 1110 is used to receive one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

In an embodiment, the discarding module 1120 is used for one or more of following:
discarding a PDU set in which the PDU is included; or
discarding PDU, where the PDU is one or more PDUs in a PDU set.

In an embodiment, the discarding module 1120 is used for:
determining, based on PDU set importance, a PDU set with lowest importance level or with an importance level lower than a PDU set importance level threshold as the PDU set to be discarded; and
discarding the PDU set.

In an embodiment, the discarding module 1120 is used for:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, where P is determined based on a packet loss characteristic of the terminal, predefined by a protocol, or indicated by the network side;
discarding PDUs not being transmitted in a ninth PDU set in case that z% of PDUs in the ninth PDU set are lost, where z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, where Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, where w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol (PDCP) discard timer configured by the network side expires, where the discarded PDU set is a PDU set with a PDU set importance level lower than a PDU set importance level threshold in a DRB or an LCH allowing the execution of PDU discarding.

It should be noted here that the above-mentioned apparatus provided by the embodiments of the present application may implement all the method steps implemented by the above-mentioned method embodiment, and may achieve the same effects. The same parts and beneficial effects in the embodiments as those in the method embodiments are not described in detail.

FIG. 12 is a second schematic structural diagram of an apparatus for discarding packet data unit (PDU) according to an embodiment of the present application. As shown in FIG. 12, an apparatus 1200 for discarding PDU includes:
a transmitting module 1210, used for transmitting a first message to a terminal, where the first message is used to indicate discarding PDU by the terminal.

In an embodiment, the transmitting module 1210 is used to indicate the terminal one or more of following:
starting a procedure of PDU discarding;
a data radio bearer identity (DRB ID) or logical channel identity (LCH ID) allowing an execution of PDU discarding by the terminal;
a PDU set importance level threshold allowing an execution of PDU discarding by the terminal; or
an execution rule for PDU discarding by the terminal.

In an embodiment, the first message includes dynamic indication information.

In an embodiment, the dynamic indication information includes one or more of following:
a media access control-control element (MAC-CE); or
a physical downlink control channel (PDCCH).

In an embodiment, the apparatus further includes:
a transmitting module, used for transmitting PDU discarding configuration information to the terminal, where the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

In an embodiment, the first message includes a broadcast message, a multicast message, or a unicast message.

In an embodiment, the transmitting module 1210 is used to indicate a presence of network congestion or to indicate discarding PDU in case of a presence of network congestion.

In an embodiment, the transmitting module 1210 is used to transmit one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, where N is determined based on a packet loss characteristic of the terminal, predefined by a protocol, or indicated by the network side;
discarding PDUs not being transmitted in a third PDU set in case that x% of PDUs in the third PDU set are lost, where x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, where M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, where y is determined based on a packet loss characteristic of the terminal, predefined by a protocol, or indicated by the network side; or
discarding a PDU set after a PDU set based packet data convergence protocol (PDCP) discard timer configured by the network side expires, where the discarded PDU set is a PDU set with a PDU set importance level lower than the PDU set importance level threshold in a DRB or an LCH allowing the execution of PDU discarding.

It should be noted here that the above-mentioned apparatus provided by the embodiments of the present application may implement all the method steps implemented by the above-mentioned method embodiment, and may achieve the same effects. The same parts and beneficial effects in the embodiments as those in the method embodiments are not described in detail.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the related art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

An embodiment of the present application provides a processor-readable storage medium, which stores a computer program, and the computer program is used for causing a processor to perform any of the methods provided by the above embodiments.

The processor-readable storage medium may be any available medium or data storage device that may be accessed by the processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

As will be appreciated by those skilled in the art, embodiments of the present application may be provided as methods, systems, or computer program products. The present application may take the form of an entirely hardware embodiment, an entirely software embodiment, or an embodiment combining software and hardware. Moreover, the present application may take the form of a computer program product implemented on one or more computer-usable storage medium (including but not limited to disk storage and optical storage, etc.) having computer-usable program code.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for discarding uplink packet data unit, PDU, performed by a terminal, comprising:
receiving a first message transmitted from a network side, wherein the first message is used to indicate discarding PDU; and
discarding the PDU based on the first message.

2. The method of claim 1, wherein the first message is used to indicate discarding the PDU comprises:
the first message is used to indicate starting a procedure of PDU discarding;
the first message is used to indicate a data radio bearer identity, DRB ID, or logical channel identity, LCH ID, allowing an execution of PDU discarding;
the first message is used to indicate a PDU set importance level threshold allowing an execution of PDU discarding; or
the first message is used to indicate an execution rule for PDU discarding.

3. The method of claim 2, wherein the first message comprises dynamic indication information.

4. The method of claim 3, wherein the dynamic indication information comprises one or more of following:
a media access control-control element, MAC-CE; or
a physical downlink control channel, PDCCH.

5. The method of claim 3 or 4, further comprising:
obtaining PDU discarding configuration information, wherein the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

6. The method of claim 2, wherein the first message comprises a broadcast message, a multicast message, or a unicast message;
wherein the first message is further used to indicate a presence of network congestion or to indicate discarding PDU in case of a presence of network congestion.

7. The method of claim 6, further comprising:
determining the presence of network congestion.

8. The method of claim 7, wherein determining the presence of network congestion comprises one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio, SINR, measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

9. The method of any of claims 2 to 8, wherein the execution rule for PDU discarding comprises one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, wherein N is determined based on a packet loss characteristic of the terminal, predefined by a protocol, or indicated by the network side;
discarding PDUs not being transmitted in a third PDU set in case that x% of PDUs in the third PDU set are lost, wherein x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, wherein M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, wherein y is determined based on a packet loss characteristic of the terminal, predefined by a protocol, or indicated by the network side; or
discarding a PDU set after a PDU set based packet data convergence protocol, PDCP, discard timer configured by the network side expires, wherein the discarded PDU set is a PDU set with a PDU set importance level lower than the PDU set importance level threshold in a DRB or an LCH allowing the execution of PDU discarding.

10. The method of any of claims 1 to 9, wherein discarding the PDU comprises one or more of following:
discarding a PDU set in which the PDU is included; or
discarding PDU, wherein the PDU is one or more PDUs in a PDU set.

11. The method of claim 10, wherein discarding the PDU set in which the PDU is included comprises:
determining, based on PDU set importance, a PDU set with lowest importance level or with an importance level lower than a PDU set importance level threshold as the PDU set to be discarded; and
discarding the PDU set.

12. The method of any of claims 2 to 10, wherein discarding the PDU comprises one or more of following:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, wherein P is determined based on a packet loss characteristic of the terminal, predefined by a protocol, or indicated by the network side;
discarding PDUs not being transmitted in a ninth PDU set in case that z% of PDUs in the ninth PDU set are lost, wherein z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, wherein Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, wherein w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol, PDCP, discard timer configured by the network side expires, wherein the discarded PDU set is a PDU set with a PDU set importance level lower than a PDU set importance level threshold in a DRB or an LCH allowing the execution of PDU discarding.

13. A method for discarding packet data unit, PDU, performed by a network side, comprising:
transmitting a first message to a terminal, wherein the first message is used to indicate discarding PDU by the terminal.

14. The method of claim 13, wherein the first message is used to indicate discarding the PDU by the terminal comprises:
the first message is used to indicate starting a procedure of PDU discarding by the terminal;
the first message is used to indicate a data radio bearer identity, DRB ID, or logical channel identity, LCH ID, allowing an execution of PDU discarding by the terminal;
the first message is used to indicate a PDU set importance level threshold allowing an execution of PDU discarding by the terminal; or
the first message is used to indicate an execution rule for PDU discarding by the terminal.

15. The method of claim 14, wherein the first message comprises dynamic indication information.

16. The method of claim 15, wherein the dynamic indication information comprises one or more of following:
a media access control-control element, MAC-CE; or
a physical downlink control channel, PDCCH.

17. The method of claim 15 or 16, further comprising:
transmitting PDU discarding configuration information to the terminal, wherein the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

18. The method of claim 14, wherein the first message comprises a broadcast message, a multicast message, or a unicast message;
wherein the first message is further used to indicate a presence of network congestion or to indicate discarding PDU in case of a presence of network congestion.

19. The method of any of claims 14 to 18, wherein the execution rule for PDU discarding comprises one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, wherein N is determined based on a packet loss characteristic of the terminal, predefined by a protocol, or indicated by the network side;
discarding PDUs not being transmitted in a third PDU set in case that x% of PDUs in the third PDU set are lost, wherein x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, wherein M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, wherein y is determined based on a packet loss characteristic of the terminal, predefined by a protocol, or indicated by the network side; or
discarding a PDU set after a PDU set based packet data convergence protocol, PDCP, discard timer configured by the network side expires, wherein the discarded PDU set is a PDU set with a PDU set importance level lower than the PDU set importance level threshold in a DRB or an LCH allowing the execution of PDU discarding.

20. A terminal, comprising: a memory, a transceiver, and a processor;
wherein the memory is used for storing a computer program; the transceiver is used for transmitting and receiving data under control of the processor; and the processor is used for reading the computer program in the memory and performing following operations:
receiving a first message transmitted from a network side, wherein the first message is used to indicate discarding PDU; and
discarding the PDU based on the first message.

21. The terminal of claim 20, wherein the first message is used to indicate discarding the PDU comprises:
the first message is used to indicate starting a procedure of PDU discarding;
the first message is used to indicate a data radio bearer identity, DRB ID, or logical channel identity, LCH ID, allowing an execution of PDU discarding;
the first message is used to indicate a PDU set importance level threshold allowing an execution of PDU discarding; or
the first message is used to indicate an execution rule for PDU discarding.

22. The terminal of claim 21, wherein the first message comprises dynamic indication information.

23. The terminal of claim 22, wherein the dynamic indication information comprises one or more of following:
a media access control-control element, MAC-CE; or
a physical downlink control channel, PDCCH.

24. The terminal of claim 22 or 23, wherein the operation further comprising:
obtaining PDU discarding configuration information, wherein the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

25. The terminal of claim 21, wherein the first message comprises a broadcast message, a multicast message, or a unicast message;
wherein the first message is further used to indicate a presence of network congestion or to indicate discarding PDU in case of a presence of network congestion.

26. The terminal of claim 25, wherein the operation further comprising:
determining the presence of network congestion.

27. The terminal of claim 26, wherein determining the presence of network congestion comprises one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio, SINR, measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

28. The terminal of any of claims 21 to 27, wherein the execution rule for PDU discarding comprises one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, wherein N is determined based on a packet loss characteristic of the terminal, predefined by a protocol, or indicated by the network side;
discarding PDUs not being transmitted in a third PDU set in case that x% of PDUs in the third PDU set are lost, wherein x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, wherein M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, wherein y is determined based on a packet loss characteristic of the terminal, predefined by a protocol, or indicated by the network side; or
discarding a PDU set after a PDU set based packet data convergence protocol, PDCP, discard timer configured by the network side expires, wherein the discarded PDU set is a PDU set with a PDU set importance level lower than the PDU set importance level threshold in a DRB or an LCH allowing the execution of PDU discarding.

29. The terminal of any of claims 20 to 28, wherein discarding the PDU comprises one or more of following:
discarding a PDU set in which the PDU is included; or
discarding PDU, wherein the PDU is one or more PDUs in a PDU set.

30. The terminal of claim 29, wherein discarding the PDU set in which the PDU is included comprises:
determining, based on PDU set importance, a PDU set with lowest importance level or with an importance level lower than a PDU set importance level threshold as the PDU set to be discarded; and
discarding the PDU set.

31. The terminal of any of claims 21 to 29, wherein discarding the PDU comprises one or more of following:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, wherein P is determined based on a packet loss characteristic of the terminal, predefined by a protocol, or indicated by the network side;
discarding PDUs not being transmitted in a ninth PDU set in case that z% of PDUs in the ninth PDU set are lost, wherein z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, wherein Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, wherein w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol, PDCP, discard timer configured by the network side expires, wherein the discarded PDU set is a PDU set with a PDU set importance level lower than a PDU set importance level threshold in a DRB or an LCH allowing the execution of PDU discarding.

32. A network side device, comprising: a memory, a transceiver, and a processor;
wherein the memory is used for storing a computer program; the transceiver is used for transmitting and receiving data under control of the processor; and the processor is used for reading the computer program in the memory and performing following operations:
transmitting a first message to a terminal, wherein the first message is used to indicate discarding PDU by the terminal.

33. The network side device of claim 32, wherein the first message is used to indicate discarding the PDU by the terminal comprises:
the first message is used to indicate starting a procedure of PDU discarding by the terminal;
the first message is used to indicate a data radio bearer identity, DRB ID, or logical channel identity, LCH ID, allowing an execution of PDU discarding by the terminal;
the first message is used to indicate a PDU set importance level threshold allowing an execution of PDU discarding by the terminal; or
the first message is used to indicate an execution rule for PDU discarding by the terminal.

34. The network side device of claim 33, wherein the first message comprises dynamic indication information.

35. The network side device of claim 34, wherein the dynamic indication information comprises one or more of following:
a media access control-control element, MAC-CE; or
a physical downlink control channel, PDCCH.

36. The network side device of claim 34 or 35, wherein the operation further comprising:
transmitting PDU discarding configuration information to the terminal, wherein the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

37. The network side device of claim 33, wherein the first message comprises a broadcast message, a multicast message, or a unicast message;
wherein the first message is further used to indicate a presence of network congestion or to indicate discarding PDU in case of a presence of network congestion.

38. The network side device of any of claims 33 to 37, wherein the execution rule for PDU discarding comprises one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, wherein N is determined based on a packet loss characteristic of the terminal, predefined by a protocol, or indicated by the network side;
discarding PDUs not being transmitted in a third PDU set in case that x% of PDUs in the third PDU set are lost, wherein x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, wherein M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, wherein y is determined based on a packet loss characteristic of the terminal, predefined by a protocol, or indicated by the network side; or
discarding a PDU set after a PDU set based packet data convergence protocol, PDCP, discard timer configured by the network side expires, wherein the discarded PDU set is a PDU set with a PDU set importance level lower than the PDU set importance level threshold in a DRB or an LCH allowing the execution of PDU discarding.

39. An apparatus for discarding packet data unit, PDU, comprising:
a first receiving module, used for receiving a first message transmitted from a network side, wherein the first message is used to indicate discarding PDU; and
a discarding module, used for discarding the PDU based on the first message.

40. The apparatus of claim 39, wherein the first message is used to indicate discarding the PDU comprises one or more of following:
starting a procedure of PDU discarding;
a data radio bearer identity, DRB ID, or logical channel identity, LCH ID, allowing an execution of PDU discarding;
a PDU set importance level threshold allowing an execution of PDU discarding; or
an execution rule for PDU discarding.

41. The apparatus of claim 40, wherein the first message comprises dynamic indication information.

42. The apparatus of claim 41, wherein the dynamic indication information comprises one or more of following:
a media access control-control element, MAC-CE; or
a physical downlink control channel, PDCCH.

43. The apparatus of claim 41 or 42, further comprising:
an obtaining module, used for obtaining PDU discarding configuration information, wherein the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

44. The apparatus of claim 40, wherein the first message comprises a broadcast message, a multicast message, or a unicast message;
wherein the first message is further used to indicate a presence of network congestion or to indicate discarding PDU in case of a presence of network congestion.

45. The apparatus of claim 44, further comprising:
a determining module, used for determining the presence of network congestion.

46. The apparatus of claim 45, wherein the determining module is used for performing one or more of following:
determining the presence of network congestion in case of receiving the first message;
performing a network congestion measurement to obtain a network congestion measurement result, and determining the presence of network congestion based on the network congestion measurement result;
performing an interference measurement to obtain an interference measurement result, and determining the presence of network congestion in case that an interference value determined based on the interference measurement result is greater than an interference threshold;
performing a signal-to-interference-plus-noise ratio, SINR, measurement to obtain an SINR measurement result, and determining the presence of network congestion in case that an SINR determined based on the SINR measurement result is less than an SINR threshold; or
determining the presence of network congestion in case that buffer status of the terminal is known to the network side and the terminal is not allocated with an uplink resource within a given period.

47. The apparatus of any of claims 40 to 46, wherein the execution rule for PDU discarding comprises one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, wherein N is determined based on a packet loss characteristic of the terminal, predefined by a protocol, or indicated by the network side;
discarding PDUs not being transmitted in a third PDU set in case that x% of PDUs in the third PDU set are lost, wherein x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, wherein M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, wherein y is determined based on a packet loss characteristic of the terminal, predefined by a protocol, or indicated by the network side; or
discarding a PDU set after a PDU set based packet data convergence protocol, PDCP, discard timer configured by the network side expires, wherein the discarded PDU set is a PDU set with a PDU set importance level lower than the PDU set importance level threshold in a DRB or an LCH allowing the execution of PDU discarding.

48. The apparatus of any of claims 39 to 47, wherein the discarding module is used for performing one or more of following:
discarding a PDU set in which the PDU is included; or
discarding PDU, wherein the PDU is one or more PDUs in a PDU set.

49. The apparatus of claim 48, wherein the discarding module is used for:
determining, based on PDU set importance, a PDU set with lowest importance level or with an importance level lower than a PDU set importance level threshold as the PDU set to be discarded; and
discarding the PDU set.

50. The apparatus of any of claims 40 to 48, wherein the discarding module is used for:
discarding the PDU based on an execution rule;
discarding PDUs not being transmitted in a seventh PDU set in case that one or more PDUs in the seventh PDU set fail to be transmitted;
discarding PDUs not being transmitted in an eighth PDU set in case that a number P of PDUs in the eighth PDU set fail to be transmitted, wherein P is determined based on a packet loss characteristic of the terminal, predefined by a protocol, or indicated by the network side;
discarding PDUs not being transmitted in a ninth PDU set in case that z% of PDUs in the ninth PDU set are lost, wherein z is determined based on a packet loss characteristic of the terminal, predefined by a protocol, or indicated by the network side;
discarding PDUs not being transmitted in a tenth PDU set in case that a number Q of PDUs in the tenth PDU set are transmitted successfully, wherein Q is determined based on a packet loss characteristic of the terminal, predefined by a protocol, or indicated by the network side;
discarding PDUs not being transmitted in an eleventh PDU set in case that one or more PDUs in the eleventh PDU set are transmitted successfully;
discarding PDUs not being transmitted in a twelfth PDU set in case that w% of PDUs in the twelfth PDU set are transmitted successfully, wherein w is determined based on a packet loss characteristic of the terminal, predefined by a protocol, or indicated by the network side;
discarding PDUs not being transmitted in case that an available uplink resource cannot carry the PDU not being transmitted;
discarding a first given proportion of PDUs from PDUs not being transmitted in a thirteenth PDU set;
discarding a second given proportion of PDUs from all PDUs to be transmitted; or
discarding a PDU set after a PDU set based packet data convergence protocol, PDCP, discard timer configured by the network side expires, wherein the discarded PDU set is a PDU set with a PDU set importance level lower than a PDU set importance level threshold in a DRB or an LCH allowing the execution of PDU discarding.

51. An apparatus for discarding packet data unit, PDU, comprising:
a transmitting module, used for transmitting a first message to a terminal, wherein the first message is used to indicate discarding PDU by the terminal.

52. The apparatus of claim 51, wherein the first message is used to indicate discarding the PDU by the terminal comprises:
the first message is used to indicate starting a procedure of PDU discarding by the terminal;
the first message is used to indicate a data radio bearer identity, DRB ID, or logical channel identity, LCH ID, allowing an execution of PDU discarding by the terminal;
the first message is used to indicate a PDU set importance level threshold allowing an execution of PDU discarding by the terminal; or
the first message is used to indicate an execution rule for PDU discarding by the terminal.

53. The apparatus of claim 52, wherein the first message comprises dynamic indication information.

54. The apparatus of claim 53, wherein the dynamic indication information comprises one or more of following:
a media access control-control element, MAC-CE; or
a physical downlink control channel, PDCCH.

55. The apparatus of claim 53 or 54, further comprising:
a transmitting module, used for transmitting PDU discarding configuration information to the terminal, wherein the PDU discarding configuration information is used to indicate one or more of following:
the DRB ID or LCH ID allowing the execution of PDU discarding;
the PDU set importance level threshold allowing the execution of PDU discarding; or
the execution rule for PDU discarding.

56. The apparatus of claim 52, wherein the first message comprises a broadcast message, a multicast message, or a unicast message;
wherein the first message is further used to indicate a presence of network congestion or to indicate discarding PDU in case of a presence of network congestion.

57. The apparatus of any of claims 52 to 56, wherein the execution rule for PDU discarding comprises one or more of following:
discarding PDUs not being transmitted in a first PDU set in case that one or more PDUs in the first PDU set fail to be transmitted;
discarding PDUs not being transmitted in a second PDU set in case that a number N of PDUs in the second PDU set fail to be transmitted, wherein N is determined based on a packet loss characteristic of the terminal, predefined by a protocol, or indicated by the network side;
discarding PDUs not being transmitted in a third PDU set in case that x% of PDUs in the third PDU set are lost, wherein x is determined based on a packet loss characteristic of the terminal, predefined by a protocol, or indicated by the network side;
discarding PDUs not being transmitted in a fourth PDU set in case that a number M of PDUs in the fourth PDU set are transmitted successfully, wherein M is determined based on a packet loss characteristic of the terminal, predefined by a protocol, or indicated by the network side;
discarding PDUs not being transmitted in a fifth PDU set in case that one or more PDUs in the fifth PDU set are transmitted successfully;
discarding PDUs not being transmitted in a sixth PDU set in case that y% of PDUs in the sixth PDU set are transmitted successfully, wherein y is determined based on a packet loss characteristic of the terminal, predefined by a protocol, or indicated by the network side; or
discarding a PDU set after a PDU set based packet data convergence protocol, PDCP, discard timer configured by the network side expires, wherein the discarded PDU set is a PDU set with a PDU set importance level lower than the PDU set importance level threshold in a DRB or an LCH allowing the execution of PDU discarding.

58. A processor-readable storage medium, storing a computer program, wherein the computer program is used for causing a processor to perform the method of any of claims 1 to 19.
